(19) Europäisches Patentamt
European Patent Office
Office européen des brevets

(11) **EP 3 975 296 A1**

(12) **EUROPEAN PATENT APPLICATION**
published in accordance with Art. 153(4) EPC

(43) Date of publication:
**30.03.2022 Bulletin 2022/13**

(21) Application number: **20813036.9**

(22) Date of filing: **29.05.2020**

(51) International Patent Classification (IPC):
**H01M 4/62** (2006.01)     **H01M 4/14** (2006.01)
**H01M 10/06** (2006.01)

(52) Cooperative Patent Classification (CPC):
**H01M 4/14; H01M 4/62; H01M 10/06;** Y02E 60/10

(86) International application number:
**PCT/JP2020/021477**

(87) International publication number:
**WO 2020/241880 (03.12.2020 Gazette 2020/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2019 JP 2019103306**

(71) Applicant: **GS Yuasa International Ltd.
Kyoto-shi, Kyoto 601-8520 (JP)**

(72) Inventors:
• **Muhammad Syahid Fitri Bin Azahar
Kyoto-shi, Kyoto 601-8520 (JP)**
• **OBAYASHI, Chihiro
Kyoto-shi, Kyoto 601-8520 (JP)**
• **HAMANO, Yasuyuki
Kyoto-shi, Kyoto 601-8520 (JP)**
• **KAGOHASHI, Hiroki
Kyoto-shi, Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(54) **LEAD ACID STORAGE BATTERY**

(57)     A positive electrode plate, a negative electrode plate, and an electrolyte solution are provided. The negative electrode plate includes a negative electrode material, and the negative electrode material contains a polymer compound and a carbonaceous material. The polymer compound has a peak in a range of 3.2 ppm or more and 3.8 ppm or less in a chemical shift of $^1$H-NMR spectrum, or contains a repeating structure of oxy $C_{2-4}$ alkylene units.

Fig. 1

**Description**

TECHNICAL FIELD

The present invention relates to a lead-acid battery.

BACKGROUND ART

Lead-acid batteries are in use for various applications, including automotive and industrial applications. The lead-acid battery includes, for example, an element including a positive electrode plate, a negative electrode plate, and a separator interposed between these electrode plates, and an electrolyte solution.

The lead-acid battery is sometimes used in a poor charged state called partial state of charge (PSOC). For example, lead-acid batteries are used in the PSOC in an idling stop system (ISS). In the PSOC, the electrolyte solution having a large specific gravity descends during charge, so that stratification in which a difference in specific gravity of the electrolyte solution increases is likely to occur. When the stratification occurs, a charge reaction hardly occurs on a bottom side of the negative electrode plate, so that accumulation of lead sulfate becomes remarkable, and sulfation proceeds, or permeation short circuit is likely to occur. On the other hand, since a charge-discharge reaction is likely to occur on an upper side of the plate, softening of the positive electrode material becomes remarkable in a portion on a top side of the positive electrode plate. As a result, the life of the lead-acid battery is reduced.

Thus, it has been studied to improve life performance of the lead-acid battery in the PSOC. For example, Patent Document 1 proposes a lead-acid battery including an element formed by stacking a positive electrode plate and a negative electrode plate with a separator interposed between the electrode plates, an electrolyte solution, and a container accommodating the element, in which a length A between outer ends of lugs at both ends immediately below at least one of a positive electrode strap and a negative electrode strap is smaller than a length B between outer ends in a stacking direction of upper frame rib portions of the electrode plates located at the both ends immediately below the at least one strap, and a porous layer is provided at least one of between the separator and the positive electrode plate and between the separator and the negative electrode plate.

An additive may be added to constituent members of the lead-acid battery from the viewpoint of imparting various functions such as life performance. For example, Patent Document 2 proposes a lead-acid battery in which a copolymer of propylene oxide and ethylene oxide is added to a negative electrode plate active material in combination with lignin sulfonate. Patent Document 3 proposes a lead-acid battery in which an activator containing an organic polymer is enclosed in a small sealed case having a cleavage mechanism into a container, and the small sealed case is attached to the container or a lid part. Patent Document 4 proposes a fiber-attached mat containing a plurality of fibers coated with a size composition, a binder composition, and one or more additives, in which the additives include one or more of rubber additives, rubber derivatives, aldehydes, metal salts, ethylene-propylene oxide block copolymers, sulfuric acid esters, sulfonic acid esters, phosphoric acid esters, polyacrylic acid, polyvinyl alcohol, lignin, phenol formaldehyde resins, cellulose, wood flour, and the like, and the additives can function to reduce moisture loss in a lead-acid battery.

Patent Document 5 proposes use, in the preparation of a lead battery electrode formulation, of a liquid composition, stable over time, comprising from 0.2% by weight to 10% by weight of carbon-based nanofillers, at least one water-soluble polymer and from 0.01% by weight to 50% by weight of at least one cationic component chosen from alkali metal or alkaline earth metal cations and ammonium ions dispersed in an aqueous medium, the carbon-based nanofillers being carbon nanotubes, graphene or a mixture of carbon nanotubes and graphene in all proportions, and the water-soluble polymer being chosen from polysaccharides; modified polysaccharides, such as modified celluloses; polyethers, such as polyalkylene oxides or polyalkylene glycols; lignosulphonates; polyacrylates; products based on polycarboxylic acids, in particular polyether polycarboxylates or their copolymers; naphthalenesulphonates and their derivatives; and their corresponding aqueous solutions.

PRIOR ART DOCUMENTS

PATENT DOCUMENTS

   Patent Document 1: JP-A-2017-188477
   Patent Document 2: JP-A-60-182662
   Patent Document 3: JP-A-2000-149980
   Patent Document 4: JP-W-2017-525092
   Patent Document 5: JP-W-2018-508961

## SUMMARY OF THE INVENTION

### PROBLEMS TO BE SOLVED BY THE INVENTION

In a PSOC cycle of the lead-acid battery, generally, a charge-discharge reaction tends to be non-uniform, accumulation and sulfation of lead sulfate tend to proceed in a negative electrode plate, and softening of the positive electrode material tends to proceed. In general, when a surface of lead is covered with an organic additive, a resistance component is formed, so that a charge-discharge reaction hardly occurs. Since lead sulfate generated during discharge is less likely to be eluted during charge, charge acceptability is deteriorated. As a result, the accumulation of lead sulfate in the PSOC cycle becomes remarkable, the charge-discharge reaction tends to occur ununiformly in the electrode plate, and the softening of the positive electrode material tends to proceed. Thus, when the organic additive is used for a negative electrode material, PSOC life performance is expected to decrease. When the softening of the positive electrode material proceeds, even if gas is slightly generated in the lead-acid battery, the positive electrode material is likely to fall off, and, at the same time, MOS short circuit may occur due to the fallen positive electrode material, so that a PSOC life is shortened.

In general, when a carbonaceous material is added to the negative electrode material, conductivity is improved, and the PSOC life performance is improved. However, when the negative electrode material contains the carbonaceous material, gas generation on a surface of the carbonaceous material becomes remarkable. Thus, in a state in which the positive electrode material is easily softened, it is considered that it is difficult to suppress falling off of the positive electrode material and the MOS short circuit even when the carbonaceous material is used for the negative electrode material.

### MEANS FOR SOLVING THE PROBLEMS

One aspect of the present invention relates to a lead-acid battery including a positive electrode plate, a negative electrode plate, and an electrolyte solution,

in which the negative electrode plate includes a negative electrode material,
the negative electrode material contains a polymer compound and a carbonaceous material, and
the polymer compound has a peak in a range of 3.2 ppm or more and 3.8 ppm or less in a chemical shift of $^1$H-NMR spectrum.

Another aspect of the present invention relates to a lead-acid battery including a positive electrode plate, a negative electrode plate, and an electrolyte solution,

in which the negative electrode plate includes a negative electrode material, and
the negative electrode material contains a carbonaceous material and a polymer compound containing a repeating structure of oxy $C_{2-4}$ alkylene units.

### ADVANTAGES OF THE INVENTION

In the lead-acid battery, the PSOC life performance can be remarkably improved.

### BRIEF DESCRIPTION OF THE DRAWINGS

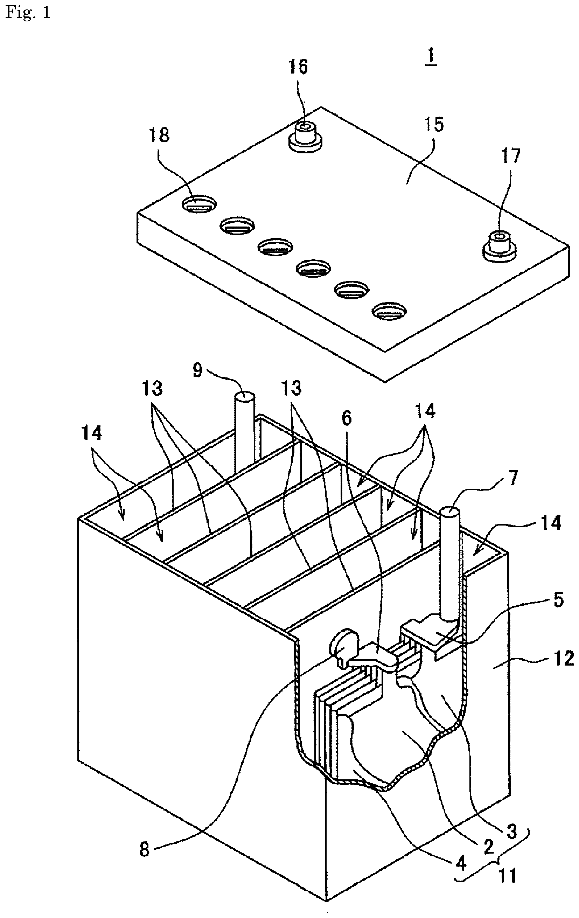

Fig. 1 is a partially cutaway exploded perspective view showing an appearance and an internal structure of a lead-acid battery according to one aspect of the present invention.

### MODE FOR CARRYING OUT THE INVENTION

In a PSOC cycle of the lead-acid battery, generally, a charge-discharge reaction tends to be non-uniform, accumulation and sulfation of lead sulfate tend to proceed in a negative electrode plate, and softening of the positive electrode material tends to proceed. When the softening of the positive electrode material proceeds, even if gas is slightly generated in the lead-acid battery, the positive electrode material is likely to fall off, and, at the same time, MOS short circuit may occur due to the fallen positive electrode material, so that the life is shortened.

In general, when the lead-acid battery is used in the PSOC cycle, the negative electrode plate is likely to deteriorate due to sulfation. Thus, in order to suppress deterioration of the negative electrode plate, recovery charge is generally performed to set the lead-acid battery to a high SOC (for example, full charge) at an appropriate timing. During recovery charge, the negative electrode plate tends to be in an overcharged state, and hydrogen gas is generated by reduction of proton. When the negative electrode material contains a carbonaceous material, overcharge easily proceeds in an upper portion of the negative electrode plate. In addition, when the lead-acid battery is tilted in the overcharged state, hydrogen gas is generated in the negative electrode plate. When such gas generation becomes remarkable, the gas collides with the softened positive electrode material to promote falling off, and the fallen positive electrode material may cause the MOS short circuit. Thus, also from such a viewpoint, the PSOC life performance is greatly deteriorated.

When the negative electrode material contains the carbonaceous material, conductivity of the negative electrode material is generally improved, and the PSOC life performance is improved. However, gas generation on a surface of the carbonaceous material becomes remarkable. Since overcharge easily proceeds in the upper portion of the negative electrode plate, gas generation becomes particularly remarkable.

On the other hand, when an organic additive (oil, polymer, organic expander, or the like) is contained in the negative electrode material, a surface of lead is covered with the organic additive. Since the organic additive is usually insulating, resistance increases, and the charge-discharge reaction hardly occurs. The presence of the organic additive near lead sulfate generated during discharge makes it difficult for lead sulfate to be eluted during charge, thereby deteriorating the charge acceptability. As a result, in the PSOC cycle, the accumulation of lead sulfate becomes remarkable, and the charge-discharge reaction tends to occur ununiformly in the electrode plate; therefore, the softening of the positive electrode material tends to proceed. Thus, it is considered that when the organic additive is used for the negative electrode material, the PSOC life performance decreases.

Contrary to such conventional technical common knowledge, it has now been found that high PSOC life performance can be secured when the negative electrode material contains the carbonaceous material and a specific polymer compound. This will be described in more detail below.

A lead-acid battery according to one aspect of the present invention includes a positive electrode plate, a negative electrode plate, and an electrolyte solution. The negative electrode plate includes a negative electrode material, and the negative electrode material contains a polymer compound and a carbonaceous material. The polymer compound has a peak in a range of 3.2 ppm or more and 3.8 ppm or less in a chemical shift of $^1$H-NMR spectrum.

Note that the peak appearing in the range of 3.2 ppm or more and 3.8 ppm or less in the $^1$H-NMR spectrum is derived from an oxy $C_{2-4}$ alkylene unit. Here, the $^1$H-NMR spectrum is measured using deuterated chloroform as a solvent.

A lead-acid battery according to another aspect of the present invention includes a positive electrode plate, a negative electrode plate, and an electrolyte solution. The negative electrode plate includes a negative electrode material. The negative electrode material contains a carbonaceous material and a polymer compound containing a repeating structure of oxy $C_{2-4}$ alkylene units.

As described above, in the lead-acid battery according to one aspect and another aspect of the present invention, the negative electrode material contains the polymer compound and the carbonaceous material as described above. Thus, high PSOC life performance can be secured. In addition, although it is presumed that the polymer compound alone has no effect of improving the PSOC life performance, the PSOC life performance is remarkably improved when the carbonaceous material and the polymer compound are combined as compared with the case of using the carbonaceous material. More specifically, higher PSOC life performance than expected from the case where the polymer compound is contained in the negative electrode material and the case where the carbonaceous material is contained in the negative electrode material is obtained when the polymer compound and the carbonaceous material are combined. That is, it can be said that the inclusion of the polymer compound and the carbonaceous material in the negative electrode material synergistically improves the PSOC life performance. The reason why such a high effect of improving the PSOC life performance is obtained is considered to be as follows.

First, since the negative electrode material contains the polymer compound, the amount of overcharge in the lead-acid battery is reduced. In the lead-acid battery, the reaction during overcharge is greatly affected by a reductive reaction of hydrogen ions at an interface between lead and an electrolyte solution. Thus, the reason why the amount of overcharge is reduced is considered to be that the surface of lead which is a negative active material is covered with the polymer compound, so that a hydrogen overvoltage increases, and a side reaction in which hydrogen is generated from protons during overcharge is inhibited. By reducing the amount of overcharge, generation of hydrogen gas during overcharge is suppressed.

The polymer compound easily takes a linear structure by having oxy $C_{2-4}$ alkylene units, and thus it is considered that the polymer compound hardly remains in the negative electrode material and easily diffuses into the electrolyte solution. Thus, it is expected that the effect of reducing the amount of overcharge is hardly obtained even when the polymer compound is used. However, contrary to such expectation, the present inventors have actually found that even when a very small amount of a polymer compound is contained in the negative electrode material, the effect of reducing the amount of overcharge can be obtained. Since even a very small amount of the polymer compound can provide the effect of reducing the amount of overcharge, it is considered that when the polymer compound is contained in the negative electrode material, the polymer compound can be present near lead, whereby a high adsorption action of the oxy $C_{2-4}$ alkylene unit on lead is exerted. It is further considered that the polymer compound spreads thinly on the lead surface and the reductive reaction of hydrogen ions in a wide region of the lead surface is suppressed. This does not contradict that the polymer compound easily takes a linear structure. Since the surface of the carbonaceous material contained in the negative electrode material is also covered with the polymer compound, it is considered that gas generation on the surface of the carbonaceous material is also suppressed.

As described above, inclusion of the polymer compound in the negative electrode material reduces the amount of overcharge and suppresses generation of hydrogen gas during overcharge, and gas generation on the surface of the carbonaceous material is suppressed. Thus, even when the softening of the positive electrode material proceeds, falling off is suppressed. The MOS short circuit due to the fallen positive electrode material is also suppressed. Thus, it is considered that high PSOC life performance can be secured. Since suppression of hydrogen generation during overcharge improves overcharge characteristics (high-temperature overcharge life performance) and can reduce the liquid decrease, it is advantageous for prolonging the life of the lead-acid battery.

In general, in the lead-acid battery, since a sulfuric acid aqueous solution is used as the electrolyte solution, when the organic additive is contained in the negative electrode material, it becomes difficult to balance elution into the electrolyte solution and adsorption to lead. For example, when an organic additive having low adsorptivity to lead is used, elution into the electrolyte solution becomes easy, so that the amount of overcharge is hardly reduced. On the other hand, when an organic additive having high adsorptivity to lead is used, it is difficult to thinly adhere the organic additive to the lead surface, and the organic additive tends to be unevenly distributed in the lead pores.

In general, when the lead surface is covered with an organic additive, the reductive reaction of hydrogen ions hardly occurs, and therefore the amount of overcharge tends to decrease. When the lead surface is covered with the organic additive, lead sulfate generated during discharge is hardly eluted during charge, so that charge acceptability is deteriorated. Thus, suppression of deterioration of the charge acceptability and reduction in the amount of overcharge are in a trade-off relationship, and it has been conventionally difficult to achieve both simultaneously. In addition, when the organic additive is unevenly distributed in lead pores, it is necessary to increase a content of the organic additive in the negative electrode material in order to secure a sufficient effect of reducing the amount of overcharge. However, when the content of the organic additive is increased, the charge acceptability is greatly deteriorated. When the organic additive is unevenly distributed in the lead pores, movement of ions (such as lead ions and sulfate ions) is inhibited by steric hindrance of the unevenly distributed organic additive, and the charge acceptability may be deteriorated.

On the other hand, in the lead-acid battery according to one aspect and another aspect of the present invention, the polymer compound having an oxy $C_{2-4}$ alkylene unit is contained in the negative electrode material, so that the lead surface is covered with the polymer compound in the thinly spread state as described above. Thus, as compared with the case of using other organic additives, even when the content in the negative electrode material is small, an excellent effect of reducing the amount of overcharge can be secured. The polymer compound also thinly covers the surface of the carbonaceous material, so that it is possible to suppress a decrease in conductivity while suppressing gas generation on the surface of the carbonaceous material. Since the polymer compound thinly covers the lead surface, elution of lead sulfate, generated during discharge, during charge is less likely to be inhibited. Since the uneven distribution of the polymer compound in the lead pores is suppressed, ions easily move. As a result, it is possible to suppress the deterioration of the charge acceptability while suppressing gas generation.

As described above, in the lead-acid battery according to one aspect and another aspect of the present invention, the polymer compound is contained in the negative electrode material, so that the deterioration of the charge acceptability is suppressed. Since the surface of the carbonaceous material is thinly covered with the polymer compound, it is easy to maintain high conductivity of the carbonaceous material while suppressing side reactions on the surface of the carbonaceous material, and electricity is easily for the reduction of lead sulfate (that is, charge efficiency is easily improved). Thus, accumulation of lead sulfate in the PSOC cycle can be suppressed, and charge and discharge are more likely to occur uniformly. Thus, the softening itself of the positive electrode material is also suppressed. As described above, since the softening of the positive electrode material is suppressed, it is considered that high PSOC life performance can be secured.

In order to obtain such an effect of the polymer compound, the polymer compound needs to be present near lead or lead sulfate and the carbonaceous material. Thus, in the lead-acid battery according to one aspect and another aspect of the present invention, the negative electrode material contains the polymer compound as described above. It is important that the negative electrode material contains the polymer compound regardless of whether or not a component of the lead-acid battery other than the negative electrode material contains the polymer compound. With such a configuration, gas generation can be suppressed, and the softening itself of the positive electrode material is suppressed, so that high PSOC life performance can be secured.

It is sufficient that the polymer compound can be contained in the negative electrode material, and the source of the polymer compound contained in the negative electrode material is not particularly limited. The polymer compound may be contained in any of the components (for example, a negative electrode plate, a positive electrode plate, an electrolyte solution, and/or a separator, and the like) of the lead-acid battery when preparing the lead-acid battery. The polymer compound may be contained in one constituent element, or may be contained in two or more constituent elements (for example, a negative electrode plate, an electrolyte solution, and the like).

When the specific surface area of the carbonaceous material is S ($m^2/g$) and the content of the carbonaceous material in the negative electrode material is C, a product: S × C of the specific surface area and the content per 1 g of the negative electrode material may be 0.1 $m^2/g$ or more. Since the polymer compound also covers the surface of the carbonaceous material, a coating amount with respect to lead or lead sulfate is also affected by the specific surface area and amount of the carbonaceous material. When the polymer compound is used and the product S × C is within the above range, higher PSOC life performance can be secured, and high high-temperature overcharge life performance can be secured.

The content C of the carbonaceous material is a mass ratio of the carbonaceous material in the negative electrode material. When the carbonaceous material includes two or more kinds of carbonaceous materials, the product S × C is determined by summing the products of the specific surface areas and the mass ratios of the carbonaceous materials.

The content C and the specific surface area S of the carbonaceous material are determined for the lead-acid battery in a fully charged state.

The lead-acid battery may be either a valve regulated (sealed) lead-acid battery or a flooded-type (vented type) lead-acid battery.

In the present specification, the fully charged state of the flooded-type lead-acid battery is defined by the definition of JIS D 5301: 2006. More specifically, the following state is defined as a fully charged state: the lead-acid battery is charged at a current (A) 0.2 times as large as a numerical value described as a rated capacity (Ah) until a terminal voltage during charge measured every 15 minutes or an electrolyte solution density subjected to temperature correction to 20°C exhibits a constant value at three significant digits continuously three times. Also, in the case of a valve regulated lead-acid battery, the fully charged state is a state where the lead-acid battery is subjected to constant current constant voltage charge of 2.23 V/cell at a current (A) 0.2 times as large as the numerical value described as the rated capacity (Ah) in an air tank of 25°C ± 2°C, and the charge is completed when the charge current during constant voltage charge becomes 0.005 times as large as the numerical value described as the rated capacity (Ah). Note that the numerical value described as the rated capacity is a numerical value in which the unit is Ah. The unit of the current set based on the numerical value indicated as the rated capacity is A.

The lead-acid battery in the fully charged state refers to a battery obtained by fully charging a formed lead-acid battery. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use refers to a battery that has not been used for a long time and has hardly deteriorated.

The carbonaceous material preferably includes at least a carbonaceous material (first carbonaceous material) having a particle size of 32 pm or more. In this case, higher PSOC life performance can be obtained.

The content C of the carbonaceous material in the negative electrode material may be 0.45% by mass or more by percentage. In this case, it is advantageous from the viewpoint of securing higher PSOC life performance.

In the lead-acid battery according to one aspect of the present invention, the polymer compound may contain an oxygen atom bonded to a terminal group and a $-CH_2-$ group and/or a -CH< group bonded to the oxygen atom. In the $^1$H-NMR spectrum, a ratio of an integrated value of the peak of 3.2 ppm to 3.8 ppm to the sum of the integrated value of this peak, an integrated value of a peak of hydrogen atoms of the $-CH_2-$ group bonded to the oxygen atom, and an integrated value of a peak of a hydrogen atom of the -CH< group bonded to the oxygen atom is preferably 85% or more. Such polymer compounds contain many oxy $C_{2-4}$ alkylene units in the molecule. Therefore, it is considered that it becomes easy to adsorb to lead, and it becomes easy to thinly cover the lead surface by easily taking a linear structure. Thus, gas generation can be more effectively suppressed. An effect of suppressing the deterioration of the charge acceptability and the charge efficiency can be further enhanced. As a result, the softening and falling off of the positive electrode material are suppressed, so that higher PSOC life performance is easily secured. Since a hydrogen generation overvoltage increases, the high-temperature overcharge life performance can be further improved.

In the $^1$H-NMR spectrum, the polymer compound having a peak in the chemical shift range of 3.2 ppm to 3.8 ppm preferably contains a repeating structure of oxy $C_{2-4}$ alkylene units. When a polymer compound containing a repeating structure of oxy $C_{2-4}$ alkylene units is used, it is considered it becomes easier to adsorb to lead, and it becomes easy to thinly cover the lead surface by easily taking a linear structure. Thus, the effect of suppressing the deterioration of the charge acceptability can be further enhanced, and the generation of hydrogen gas during overcharge can be more effectively suppressed, so that higher PSOC life performance is easily secured. Since such a polymer compound thinly covers the lead surface, elution of lead sulfate, generated during discharge, during charge is less likely to be inhibited, whereby the deterioration of the charge acceptability can also be suppressed. Thus, it is possible to suppress the deterioration of the charge acceptability while reducing the amount of overcharge.

In the present specification, the polymer compound refers to a compound having a repeating unit of oxy $C_{2-4}$ alkylene units and/or having a number average molecular weight (Mn) of 500 or more.

Note that the oxy $C_{2-4}$ alkylene unit is a unit represented by $-O-R^1-(R^1$ represents a $C_{2-4}$ alkylene group.).

The polymer compound may contain at least one selected from the group consisting of etherified products of a hydroxy compound having a repeating structure of oxy $C_{2-4}$ alkylene units and esterified products of a hydroxy compound having a repeating structure of oxy $C_{2-4}$ alkylene units. Here, the hydroxy compound is at least one selected from the group consisting of poly $C_{2-4}$ alkylene glycols, copolymers containing a repeating structure of oxy $C_{2-4}$ alkylene, and $C_{2-4}$ alkylene oxide adducts of a polyol. When such a polymer compound is used, the deterioration of the charge acceptability can be further suppressed. Since the effect of reducing the amount of overcharge is high, generation of hydrogen gas can be more effectively suppressed. Thus, higher PSOC life performance is easily secured.

The repeating structure of oxy $C_{2-4}$ alkylene units may contain at least a repeating structure of oxypropylene units $(-O-CH(-CH_3)-CH_2-)$. Such a polymer compound easily spreads thinly on a lead surface while having high adsorptivity to lead, and is considered to have an excellent balance therebetween. Thus, the effect of suppressing the deterioration of the charge acceptability can be further enhanced, and the generation of hydrogen gas during overcharge can be more effectively suppressed, which is more advantageous in securing high PSOC life performance.

As described above, since the polymer compound can thinly cover the lead surface and the surface of the carbonaceous material while having high adsorptivity to lead, even if the content of the polymer compound in the negative electrode material is small, the deterioration of the charge acceptability can be suppressed. In addition, gas generation can be more effectively suppressed, and excellent high-temperature overcharge life performance can be secured. Since steric hindrance of the polymer compound in the lead pores can be reduced, the deterioration of the charge acceptability can be suppressed. Thus, higher PSOC life performance can be secured. From the viewpoint of securing a higher PSOC life performance, the content of the polymer compound in the negative electrode material is preferably 30 ppm or more.

The polymer compound preferably contains at least a compound having Mn of 1,000 or more. In this case, since the polymer compound tends to remain in the negative electrode material and the adsorptivity to lead is enhanced, the deterioration of the charge acceptability can be continuously suppressed, and the effect of suppressing the generation of hydrogen gas is further enhanced, so that higher PSOC life performance can be secured.

The content of the polymer compound in the negative electrode material is determined for the negative electrode plate of the lead-acid battery in the fully charged state.

In the present specification, the number average molecular weight Mn is determined by gel permeation chromatography (GPC). A standard substance used for determining Mn is polyethylene glycol.

Hereinafter, the lead-acid battery according to an embodiment of the present invention will be described for each of the main constituent elements, but the present invention is not limited to the following embodiment.

[Lead-acid battery]

(Negative electrode plate)

The negative electrode plate usually includes a negative current collector in addition to a negative electrode material. The negative electrode material is obtained by removing the negative current collector from the negative electrode plate. Note that a member such as a mat or a pasting paper may be stuck to the negative electrode plate. Such a member (sticking member) is used integrally with the negative electrode plate and is thus assumed to be included in the negative electrode plate. Also, when the negative electrode plate includes such a member, the negative electrode material excludes the negative current collector and the sticking member. However, when the sticking member such as a mat is attached to a separator, a thickness of the sticking member is included in a thickness of the separator.

The negative current collector may be formed by casting lead (Pb) or a lead alloy, or may be formed by processing a lead sheet or a lead alloy sheet. Examples of the processing method include expanding processing and punching processing. It is preferable to use a negative electrode grid as the negative current collector because the negative electrode material is easily supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug of the negative current collector. The surface layer of the lug may contain Sn or an Sn alloy.

The negative electrode material contains the above polymer compound. The negative electrode material further contains a negative active material (lead or lead sulfate) that exhibits a capacity through a redox reaction. The negative electrode material may contain an expander, a carbonaceous material, and/or other additives. Examples of the additive include barium sulfate, fibers (resin fibers and the like), and the like, but are not limited thereto. Note that the negative active material in the charged state is spongy lead, but the non-formed negative electrode plate is usually prepared using lead powder.

(Polymer compound)

The polymer compound has a peak in a range of 3.2 ppm or more and 3.8 ppm or less in a chemical shift of $^1$H-NMR spectrum. Such polymer compounds have oxy $C_{2-4}$ alkylene units. Examples of the oxy $C_{2-4}$ alkylene unit include an oxyethylene unit, an oxypropylene unit, an oxytrimethylene unit, an oxy 2-methyl-1,3-propylene unit, an oxy 1,4-butylene unit, an oxy 1,3-butylene unit, and the like. The polymer compound may have one kind or two or more kinds of such oxy $C_{2-4}$ alkylene units.

The polymer compound preferably contains a repeating structure of oxy $C_{2-4}$ alkylene units. The repeating structure may contain one kind of oxy $C_{2-4}$ alkylene unit, or may contain two or more kinds of oxy $C_{2-4}$ alkylene units. The polymer compound may contain one kind of the repeating structure or two or more kinds of repeating structures.

Examples of the polymer compound include hydroxy compounds having a repeating structure of oxy $C_{2-4}$ alkylene units (poly $C_{2-4}$ alkylene glycols, copolymers containing a repeating structure of oxy $C_{2-4}$ alkylene, $C_{2-4}$ alkylene oxide adducts of a polyol, and the like), etherified or esterified products of these hydroxy compounds, and the like.

Examples of the copolymer include copolymers containing different oxy $C_{2-4}$ alkylene units, poly $C_{2-4}$ alkylene glycol alkyl ethers, poly $C_{2-4}$ alkylene glycol esters of carboxylic acids, and the like. The copolymer may be a block copolymer.

The polyol may be any of an aliphatic polyol, an alicyclic polyol, an aromatic polyol, a heterocyclic polyol, and the like. From the viewpoint that the polymer compound easily spreads thinly on the lead surface, aliphatic polyols, alicyclic polyols (for example, polyhydroxycyclohexane, polyhydroxynorbornane, and the like), and the like are preferable, and among them, aliphatic polyols are preferable. Examples of the aliphatic polyol include aliphatic diols and polyols of triol or higher (for example, glycerin, trimethylolpropane, pentaerythritol, sugar alcohol, and the like), and the like. Examples of the aliphatic diol include an alkylene glycol having 5 or more carbon atoms. The alkylene glycol may be, for example, a $C_{5-14}$ alkylene glycol or a $C_{5-10}$ alkylene glycol. Examples of the sugar alcohol include erythritol, xylitol, mannitol, sorbitol, and the like. In the alkylene oxide adduct of the polyol, the alkylene oxide corresponds to an oxy $C_{2-4}$ alkylene unit of the polymer compound and contains at least $C_{2-4}$ alkylene oxide. From the viewpoint that the polymer compound easily take a linear structure, the polyol is preferably a diol.

The etherified product has an $-OR^2$ group obtained by etherifying - OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^2$ is an organic group). Among terminals of the polymer compound, some terminals may be etherified, or all terminals may be etherified. For example, one terminal of a main chain of the linear polymer compound may be an -OH group, and the other terminal may be an $-OR^2$ group.

The esterified product has an $-O-C(=O)-R^3$ group obtained by esterifying -OH groups (-OH groups composed of a hydrogen atom of a terminal group and an oxygen atom bonded to the hydrogen atom) at at least a part of terminals of the hydroxy compound having the repeating structure of oxy $C_{2-4}$ alkylene units (wherein $R^3$ is an organic group). Among terminals of the polymer compound, some terminals may be esterified, or all terminals may be esterified. For example, one terminal of a main chain of the linear polymer compound may be an -OH group, and the other terminal may be an $-O-C(=O)-R^3$ group.

Examples of each of the organic groups $R^2$ and $R^3$ include a hydrocarbon group. The hydrocarbon group may have a substituent (for example, a hydroxy group, an alkoxy group, and/or a carboxy group, and the like). The hydrocarbon group may be any of aliphatic, alicyclic, and aromatic. The aromatic hydrocarbon group and the alicyclic hydrocarbon group may have an aliphatic hydrocarbon group (for example, an alkyl group, an alkenyl group, an alkynyl group, or the like) as a substituent. The number of carbon atoms of the aliphatic hydrocarbon group as a substituent may be, for example, 1 to 20, 1 to 10, 1 to 6, or 1 to 4.

Examples of the aromatic hydrocarbon group include aromatic hydrocarbon groups having 24 or less carbon atoms (for example, 6 to 24). The number of carbon atoms of the aromatic hydrocarbon group may be 20 or less (for example, 6 to 20), 14 or less (for example, 6 to 14), or 12 or less (for example, 6 to 12). Examples of the aromatic hydrocarbon group include an aryl group, a bisaryl group, and the like. Examples of the aryl group include a phenyl group, a naphthyl group, and the like. Examples of the bisaryl group include monovalent groups corresponding to bisarene. Examples of the bisarene include biphenyl and bisarylalkanes (for example, bis $C_{6-10}$ aryl $C_{1-4}$ alkanes (such as 2,2-bisphenylpropane), and the like).

Examples of the alicyclic hydrocarbon group include alicyclic hydrocarbon groups having 16 or less carbon atoms. The alicyclic hydrocarbon group may be a bridged cyclic hydrocarbon group. The number of carbon atoms of the alicyclic hydrocarbon group may be 10 or less or 8 or less. The number of carbon atoms of the alicyclic hydrocarbon group is, for example, 5 or more, and may be 6 or more.

The number of carbon atoms of the alicyclic hydrocarbon group may be 5 (or 6) or more and 16 or less, 5 (or 6) or more and 10 or less, or 5 (or 6) or more and 8 or less.

Examples of the alicyclic hydrocarbon group include cycloalkyl groups (cyclopentyl group, cyclohexyl group, cyclooctyl group, and the like), cycloalkenyl groups (cyclohexenyl group, cyclooctenyl group, and the like), and the like. The alicyclic hydrocarbon group also includes hydrogenated products of the aromatic hydrocarbon groups.

Among the hydrocarbon groups, an aliphatic hydrocarbon group is preferable from the viewpoint that the polymer compound easily adheres thinly to the lead surface. Examples of the aliphatic hydrocarbon group include alkyl groups, alkenyl groups, alkynyl groups, dienyl groups, and the like. The aliphatic hydrocarbon group may be either linear or branched.

The number of carbon atoms of the aliphatic hydrocarbon group is, for example, 30 or less, and may be 26 or less or 22 or less, 20 or less or 16 or less, 14 or less or 10 or less, or 8 or less or 6 or less. The lower limit of the number of carbon atoms is 1 or more for an alkyl group, 2 or more for an alkenyl group and an alkynyl group, and 3 or more for a dienyl group, depending on the type of the aliphatic hydrocarbon group. Among them, an alkyl group and an alkenyl group are preferable from the viewpoint that the polymer compound easily adheres thinly to the lead surface.

Specific examples of the alkyl group include methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-decyl, i-decyl, lauryl, myristyl, cetyl, stearyl, behenyl, and the like.

Specific examples of the alkenyl group include vinyl, 1-propenyl, allyl, palmitoleyl, oleyl, and the like. An alkenyl group may be, for example, a $C_{2-30}$ alkenyl group or a $C_{2-26}$ alkenyl group, a $C_{2-22}$ alkenyl group or a $C_{2-20}$ alkenyl group, or a $C_{10-20}$ alkenyl group.

When an etherified product of a hydroxy compound having a repeating structure of oxy $C_{2-4}$ alkylene units and/or an esterified product of a hydroxy compound having a repeating structure of oxy $C_{2-4}$ alkylene units are used among the polymer compounds, it is preferable because the effect of suppressing the deterioration of the charge acceptability can be further enhanced. Even when these polymer compounds are used, a high gas generation suppressing effect can be secured.

The negative electrode material may contain one kind or two or more kinds of polymer compounds.

From the viewpoint of further enhancing the effect of suppressing generation of hydrogen gas and the effect of suppressing the deterioration of the charge acceptability, it is preferable that the repeating structure of oxy $C_{2-4}$ alkylene contains at least a repeating structure of oxypropylene units. The polymer compound containing the oxypropylene unit has peaks derived from -CH< and -CH$_2$- of the oxypropylene unit in a range of 3.2 ppm to 3.8 ppm in a chemical shift of $^1$H-NMR spectrum. Since electron densities around a nucleus of a hydrogen atom in these groups are different, the peak is split. Such a polymer compound has peaks, for example, in a range of 3.2 ppm or more and 3.42 ppm or less and a range of more than 3.42 ppm and 3.8 ppm or less in a chemical shift of $^1$H-NMR spectrum. The peak in the range of 3.2 ppm or more and 3.42 ppm or less is derived from -CH$_2$-, and the peak in the range of more than 3.42 ppm and 3.8 ppm or less is derived from -CH< and -CH$_2$-.

Examples of such a polymer compound include polypropylene glycol, a copolymer containing a repeating structure of oxypropylene, a propylene oxide adduct of the polyol, etherified or esterified products thereof, and the like. Examples of the copolymer include oxypropylene-oxyalkylene copolymers (provided that the oxyalkylene is a $C_{2-4}$ alkylene other than oxypropylene), polypropylene glycol alkyl ethers, a polypropylene glycol ester of a carboxylic acid, and the like. Examples of the oxypropylene-oxyalkylene copolymer include an oxypropylene-oxyethylene copolymer, an oxypropylene-oxytrimethylene copolymer, and the like. The oxypropylene-oxyalkylene copolymer may be a block copolymer.

In the polymer compound containing a repeating structure of oxypropylene, the proportion of the oxypropylene unit is, for example, 5 mol% or more, and may be 10 mol% or more or 20 mol% or more.

It is preferable that the polymer compound contains a large amount of oxy $C_{2-4}$ alkylene units from the viewpoint of enhancing adsorptivity to lead and easily taking a linear structure. Such a polymer compound includes, for example, an oxygen atom bonded to a terminal group and a -CH$_2$- group and/or a -CH< group bonded to the oxygen atom. In the $^1$H-NMR spectrum of the polymer compound, the ratio of the integrated value of the peak of 3.2 ppm to 3.8 ppm to the sum of the integrated value of this peak, the integrated value of the peak of the hydrogen atoms of the -CH$_2$-group, and the integrated value of the peak of the hydrogen atom of the - CH< group increases. This ratio is, for example, 50% or more, and may be 80% or more. From the viewpoint of further enhancing the effect of reducing the amount of overcharge and further enhancing the effect of suppressing the deterioration of the charge acceptability and/or the low temperature HR discharge performance, the above ratio is preferably 85% or more, and more preferably 90% or more. For example, when the polymer compound has an -OH group at a terminal and also has a -CH$_2$- group or a - CH< group bonded to an oxygen atom of the -OH group, in the $^1$H-NMR spectrum, the peaks of the hydrogen atoms of the -CH$_2$-group and the -CH< group have a chemical shift in a range of more than 3.8 ppm and 4.0 ppm or less.

The polymer compound may contain a compound having Mn of 500 or more, a compound having Mn of 600 or more, or a compound having Mn of 1,000 or more. Mn of such a compound is, for example, 20,000 or less, and may be 15,000 or less or 10,000 or less. The Mn of the compound is preferably 5,000 or less and may be 4,000 or less or 3,000 or less, from the viewpoint of easily retaining the compound in the negative electrode material and easily spreading the compound thinner on the lead surface.

The Mn of the compound may be 500 or more (or 600 or more) and 20,000 or less, 500 or more (or 600 or more) and 15,000 or less, 500 or more (or 600 or more) and 10,000 or less, 500 or more (or 600 or more) and 5,000 or less, 500 or more (or 600 or more) and 4,000 or less, 500 or more (or 600 or more) and 3,000 or less, 1,000 or more and 20,000 or less (or 15,000 or less), 1,000 or more and 10,000 or less (or 5,000 or less), or 1,000 or more and 4,000 or less (or 3,000 or less).

The polymer compound preferably contains at least a compound having Mn of 1,000 or more. Mn of such a compound may be 1,000 or more and 20,000 or less, 1,000 or more and 15,000 or less, or 1,000 or more and 10,000 or less. The Mn of the compound is preferably 1,000 or more and 5,000 or less, and may be 1,000 or more and 4,000 or less, or 1,000 or more and 3,000 or less, from the viewpoint of easily retaining the compound in the negative electrode material and easily spreading more thinly to the lead surface. When such a compound having Mn is used, generation of hydrogen gas can be more easily suppressed, and falling off of the positive electrode material can be suppressed. By suppressing the generation of hydrogen gas, it is also possible to suppress deterioration of the negative active material due to the collision of the hydrogen gas with the negative active material, which is advantageous for prolonging the life. Since the compound having Mn as described above easily moves into the negative electrode material even when the compound is contained in the electrolyte solution, the compound can be replenished into the negative electrode material, and from such a viewpoint, the compound is easily retained in the negative electrode material. As the polymer compound, two or more compounds having different Mn may be used. That is, the polymer compound may have a plurality of peaks of Mn in the distribution of the molecular weight.

The content of the polymer compound in the negative electrode material is, for example, 10 ppm or more and may be 15 ppm or more on a mass basis. When the content of the polymer compound is in such a range, a hydrogen generation voltage can be more easily increased, and the generation of hydrogen gas can be more easily suppressed, which is advantageous in securing high PSOC life performance. From the viewpoint of easily securing higher PSOC life performance, the content of the polymer compound in the negative electrode material is preferably 30 ppm or more, may be 40 ppm or more, and may be 150 ppm or more, or 160 ppm or more. When the content is 150 ppm or more or 160 ppm or more, higher high-temperature overcharge life performance is easily secured. The content (mass basis) of the polymer compound in the negative electrode material is, for example, 1,000 ppm or less, and may be 850 ppm or less, or 800 ppm or less. From the viewpoint of easily securing high high-temperature overcharge life performance, the content is preferably 750 ppm or less or 700 ppm or less, may be 650 ppm or less or 600 ppm or less, and may be 500 ppm or less or 400 ppm or less. These lower limit values and upper limit values can be combined arbitrarily.

The content of the polymer compound in the negative electrode material may be, on a mass basis, 10 ppm or more (or 15 ppm or more) and 1,000 ppm or less, 10 ppm or more (or 15 ppm or more) and 850 ppm or less, 10 ppm or more (or 15 ppm or more) and 800 ppm or less, 10 ppm or more (or 15 ppm or more) and 750 ppm or less, 10 ppm or more (or 15 ppm or more) and 700 ppm or less, 10 ppm or more (or 15 ppm or more) and 650 ppm or less, 10 ppm or more (or 15 ppm or more) and 600 ppm or less, 10 ppm or more (or 15 ppm or more) and 500 ppm or less, 10 ppm or more (or 15 ppm or more) and 400 ppm or less, 30 ppm or more (or 40 ppm or more) and 1,000 ppm or less, 30 ppm or more (or 40 ppm or more) and 850 ppm or less, 30 ppm or more (or 40 ppm or more) and 800 ppm or less, 30 ppm or more (or 40 ppm or more) and 750 ppm or less, 30 ppm or more (or 40 ppm or more) and 700 ppm or less, 30 ppm or more (or 40 ppm or more) and 650 ppm or less, 30 ppm or more (or 40 ppm or more) and 600 ppm or less, 30 ppm or more (or 40 ppm or more) and 500 ppm or less, 30 ppm or more (or 40 ppm or more) and 400 ppm or less, 150 ppm or more (or 160 ppm or more) and 1,000 ppm or less, 150 ppm or more (or 160 ppm or more) and 850 ppm or less, 150 ppm or more (or 160 ppm or more) and 800 ppm or less, 150 ppm or more (or 160 ppm or more) and 750 ppm or less, 150 ppm or more (or 160 ppm or more) and 700 ppm or less, 150 ppm or more (or 160 ppm or more) and 650 ppm or less, 150 ppm or more (or 160 ppm or more) and 600 ppm or less, 150 ppm or more (or 160 ppm or more) and 500 ppm or less, or 150 ppm or more (or 160 ppm or more) and 400 ppm or less.

(Carbonaceous material)

Examples of the carbonaceous material include carbon black, graphite, hard carbon, soft carbon, and the like. Examples of the carbon black include acetylene black, Ketjen black, furnace black, lamp black, and the like. The graphite may be a carbonaceous material including a graphite-type crystal structure and may be either artificial graphite or natural graphite. One kind of carbonaceous material may be used alone, or two or more kinds thereof may be used in combination.

Among the carbonaceous materials, the carbonaceous material in which an intensity ratio $I_D/I_G$ of a peak (D band) appearing in a range of 1,300 $cm^{-1}$ or more and 1,350 $cm^{-1}$ or less in a Raman spectrum to a peak (G band) appearing in a range of 1,550 $cm^{-1}$ or more and 1,600 $cm^{-1}$ or less is 0 or more and 0.9 or less is referred to as graphite. The graphite may be either artificial graphite or natural graphite.

Since the polymer compound also covers the surface of the carbonaceous material, a coating amount with respect to lead or lead sulfate is also affected by the specific surface area and amount of the carbonaceous material. When the specific surface area of the carbonaceous material is S ($m^2/g$) and the content (mass ratio) of the carbonaceous material in the negative electrode material is C, it is preferable to control the product: S × C of the specific surface area and the content per 1 g of the negative electrode material. The product S × C is, for example, 0.01 $m^2$/g or more, and may be 0.05 $m^2$/g or more. From the viewpoint of easily securing higher PSOC life performance, the product S × C is preferably 0.1 $m^2$/g or more, and may be 0.2 $m^2$/g or more or 0.3 $m^2$/g or more. The product S × C is, for example, 20 $m^2$/g or less. From the viewpoint of securing higher high-temperature overcharge life performance, the product S × C is preferably 15 $m^2$/g or less, more preferably 10 $m^2$/g or less, and may be 8 $m^2$/g or less or 4 $m^2$/g or less.

The product S × C may be 0.01 $m^2$/g or more (or 0.05 $m^2$/g or more) and 20 $m^2$/g or less, 0.01 $m^2$/g or more (or 0.05 $m^2$/g or more) and 15 $m^2$/g or less, 0.01 $m^2$/g or more (or 0.05 $m^2$/g or more) and 10 $m^2$/g or less, 0.01 $m^2$/g or more (or 0.05 $m^2$/g or more) and 8 $m^2$/g or less, 0.01 $m^2$/g or more (or 0.05 $m^2$/g or more) and 4 $m^2$/g or less, 0.1 $m^2$/g or more (or 0.2 $m^2$/g or more) and 20 $m^2$/g or less, 0.1 $m^2$/g or more (or 0.2 $m^2$/g or more) and 15 $m^2$/g or less, 0.1 $m^2$/g or more (or 0.2 $m^2$/g or more) and 10 $m^2$/g or less, 0.1 $m^2$/g or more (or 0.2 $m^2$/g or more) and 8 $m^2$/g or less, 0.1 $m^2$/g or more (or 0.2 $m^2$/g or more) and 4 $m^2$/g or less, 0.3 $m^2$/g or more and 20 $m^2$/g or less (or 15 $m^2$/g or less), 0.3 $m^2$/g or more and 10 $m^2$/g or less (or 8 $m^2$/g or less), or 0.3 $m^2$/g or more and 4 $m^2$/g or less.

The specific surface area S of the carbonaceous material is a BET specific surface area determined by a gas adsorption method using nitrogen gas. The specific surface area S of the carbonaceous material is, for example, 0.5 $m^2$/g or more, and may be 0.8 $m^2$/g or more, 1 $m^2$/g or more, 2 $m^2$/g or more, 20 $m^2$/g or more, 25 $m^2$/g or more, 50 $m^2$/g or more, 70 $m^2$/g or more, 100 $m^2$/g or more, or 130 $m^2$/g or more. When the specific surface area S is in such a range, it is easy to suppress an excessive increase in the content of the polymer compound and to secure high charge acceptability. The specific surface area S is, for example, 1,500 $m^2$/g or less, may be 1,000 $m^2$/g or less, may be 700 $m^2$/g or less or 650 $m^2$/g or less, or may be 200 $m^2$/g or less or 150 $m^2$/g or less, or 130 $m^2$/g or less. When the specific surface area S is in such a range, gas generation on the surface of the carbonaceous material tends to be remarkable; however, even in such a case, gas generation can be suppressed by combining with the polymer compound. When the negative electrode material includes two or more kinds of carbonaceous materials, the specific surface area of each carbonaceous material is adjusted so that the value of the product S × C of the whole carbonaceous materials falls within the above range. The specific surface area of each carbonaceous material may be in the above range.

The specific surface area S of the carbonaceous material may be 0.5 (or 0.8) $m^2$/g or more and 1,500 $m^2$/g or less, 0.5 (or 0.8) $m^2$/g or more and 1,000 $m^2$/g or less, 0.5 (or 0.8) $m^2$/g or more and 700 $m^2$/g or less, 0.5 (or 0.8) $m^2$/g or more and 650 $m^2$/g or less, 0.5 (or 0.8) $m^2$/g or more and 200 $m^2$/g or less, 0.5 (or 0.8) $m^2$/g or more and 150 $m^2$/g or less, 0.5 (or 0.8) $m^2$/g or more and 130 $m^2$/g or less, 1 (or 2) $m^2$/g or more and 1,500 $m^2$/g or less, 1 (or 2) $m^2$/g or more and 1,000 $m^2$/g or less, 1 (or 2) $m^2$/g or more and 700 $m^2$/g or less, 1 (or 2) $m^2$/g or more and 650 $m^2$/g or less, 1 (or 2) $m^2$/g or more and 200 $m^2$/g or less, 1 (or 2) $m^2$/g or more and 150 $m^2$/g or less, 1 (or 2) $m^2$/g or more and 130 $m^2$/g or less, 20 (or 25) $m^2$/g or more and 1,500 $m^2$/g or less, 20 (or 25) $m^2$/g or more and 1,000 $m^2$/g or less, 20 (or 25) $m^2$/g or more and 700 $m^2$/g or less, 20 (or 25) $m^2$/g or more and 650 $m^2$/g or less, 20 (or 25) $m^2$/g or more and 200 $m^2$/g or less, 20 (or 25) $m^2$/g or more and 150 $m^2$/g or less, 20 (or 25) $m^2$/g or more and 130 $m^2$/g or less, 50 (or 70) $m^2$/g or more and 1,500 $m^2$/g or less, 50 (or 70) $m^2$/g or more and 1,000 $m^2$/g or less, 50 (or 70) $m^2$/g or more and 700 $m^2$/g or less, 50 (or 70) $m^2$/g or more and 650 $m^2$/g or less, 50 (or 70) $m^2$/g or more and 200 $m^2$/g or less, 50 (or 70) $m^2$/g or more and 150 $m^2$/g or less, 50 (or 70) $m^2$/g or more and 130 $m^2$/g or less, 100 (or 130) $m^2$/g or more and 1,500 $m^2$/g or less, 100 (or 130) $m^2$/g or more and 1,000 $m^2$/g or less, 100 (or 130) $m^2$/g or more and 700 $m^2$/g or less, 100 (or 130) $m^2$/g or more and 650 $m^2$/g or less, or 100 (or 130) $m^2$/g or more and 200 $m^2$/g or less.

The content C of the carbonaceous material in the negative electrode material is, by percentage (that is, C × 100 (% by mass) is), for example, 0.01% by mass or more, and may be 0.05% by mass or more or 0.1% by mass or more. From the viewpoint of easily securing higher PSOC life performance, the content C is preferably 0.3% by mass or more, more preferably 0.45% by mass or more, and may be 1% by mass or more. The content C is, for example, 5% by mass or less and may be 3.5% by mass or less. From the viewpoint of easily securing higher high-temperature overcharge life performance, the content C is preferably 3% by mass or less by percentage.

The content C of the carbonaceous material may be, by percentage, 0.01% by mass or more (or 0.05% by mass or more) and 5% by mass or less, 0.01% by mass or more (or 0.05% by mass or more) and 3.5% by mass or less, 0.01% by mass or more (or 0.05% by mass or more) and 3% by mass or less, 0.1% by mass or more (or 0.3% by mass or more) and 5% by mass or less, 0.1% by mass or more (or 0.3% by mass or more) and 3.5% by mass or less, 0.1% by mass or more (or 0.3% by mass or more) and 3% by mass or less, 0.45% by mass or more (or 1% by mass or more) and 5% by mass or less, 0.45% by mass or more (or 1% by mass or more) and 3.5% by mass or less, or 0.45% by mass or more (or 1% by mass or more) and 3% by mass or less.

The carbonaceous material may include a first carbonaceous material having a particle size of 32 pm or more, and may include a second carbonaceous material having a particle size of less than 32 pm. The carbonaceous material may include both the first carbonaceous material and the second carbonaceous material. The first carbonaceous material and the second carbonaceous material are separated and distinguished by a procedure described later.

Examples of the first carbonaceous material include at least one selected from the group consisting of graphite, hard carbon, and soft carbon. Among them, the first carbonaceous material preferably contains at least graphite. By using graphite, higher PSOC life performance can be secured. The second carbonaceous material preferably contains at least carbon black.

When the carbonaceous material contains the first carbonaceous material, a ratio of the first carbonaceous material in the whole carbonaceous material is, for example, 10% by mass or more, may be 30% by mass or more, may be 40% by mass or more or 50% by mass or more, or may be 60% by mass or more or 70% by mass or more. When the ratio of the first carbonaceous material is in such a range, high PSOC life performance can be secured. The ratio of the first carbonaceous material in the whole carbonaceous material may be 100% by mass or less or 85% by mass or less. When the ratio of the first carbonaceous material is in such a range, the conductivity is improved, and higher charge acceptability can be secured.

The ratio of the first carbonaceous material in the whole carbonaceous material may be 10% by mass or more (or 30% by mass or more) and 100% by mass or less, 40% by mass or more (or 50% by mass or more) and 100% by mass or less, 60% by mass or more (or 70% by mass or more) and 100% by mass or less, 10% by mass or more (or 30% by mass or more) and 85% by mass or less, 40% by mass or more (or 50% by mass or more) and 85% by mass or less, or 60% by mass or more (or 70% by mass or more) and 85% by mass or less.

(Expander)

The negative electrode material can contain an expander. As the expander, an organic expander is preferable. As the organic expander, lignins and/or a synthetic organic expander may be used. Examples of the lignins include lignin, lignin derivatives, and the like. Examples of the lignin derivative include lignin sulfonic acid or salts thereof (such as alkali metal salts (sodium salts and the like)), and the like. The organic expanders are generally roughly classified into lignins and synthetic organic expanders. It can also be said that the synthetic organic expander is an organic expander other than lignins. The synthetic organic expander is an organic polymer containing sulfur element, and generally contains a plurality of aromatic rings in the molecule and sulfur element as a sulfur-containing group. Among the sulfur-containing groups, a sulfonic acid group or a sulfonyl group which is in a stable form is preferable. The sulfonic acid group may exist in an acid form, or may exist in a salt form like a Na salt. The negative electrode material may contain one kind or two or more kinds of expanders.

As the organic expander, it is preferable to use a condensate containing at least a unit of an aromatic compound. Examples of such a condensate include a condensate of an aromatic compound with an aldehyde compound (aldehydes (for example, formaldehyde) and/or condensates thereof, and the like). The organic expander may contain a unit of one kind of an aromatic compound or a unit of two or more kinds of aromatic compounds.

Note that the unit of an aromatic compound refers to a unit derived from an aromatic compound incorporated in a condensate.

Examples of the aromatic ring of the aromatic compound include a benzene ring, a naphthalene ring, and the like. When the aromatic compound has a plurality of aromatic rings, the plurality of aromatic rings may be linked by a direct bond, a linking group (for example, an alkylene group (including an alkylidene group), a sulfone group, and the like), or the like. Examples of such a structure include bisarene structures (biphenyl, bisphenylalkane, bisphenylsulfone, and the like). Examples of the aromatic compound include compounds having the aromatic ring and a hydroxy group and/or an amino group. The hydroxy group or the amino group may be directly bonded to the aromatic ring, or may be bonded as an alkyl chain having a hydroxy group or an amino group. Note that the hydroxy group also includes salts of hydroxy group (-OMe). The amino group also includes salts of amino group (salts with anion). Examples of Me include alkali metals (Li, K, Na, and the like), Group 2 metals of the periodic table (Ca, Mg, and the like), and the like.

As the aromatic compound, bisarene compounds [bisphenol compounds, hydroxybiphenyl compounds, bisarene compounds having an amino group (bisarylalkane compounds having an amino group, bisarylsulfone compounds having an amino group, biphenyl compounds having an amino group, and the like), hydroxyarene compounds (hydroxynaphthalene compounds, phenol compounds, and the like), aminoarene compounds (aminonaphthalene compounds, aniline compounds (aminobenzenesulfonic acid, alkylaminobenzenesulfonic acid, and the like), and the like), and the like] are preferable. The aromatic compound may further have a substituent. The organic expander may contain one or more or a plurality of residues of these compounds. As the bisphenol compound, bisphenol A, bisphenol S, bisphenol F, and the like are preferable.

The condensate preferably contains a unit of an aromatic compound having at least a sulfur-containing group. In particular, when a condensate containing at least a unit of a bisphenol compound having a sulfur-containing group is used, an effect of suppressing deterioration of low temperature HR discharge performance after high temperature light load test can be enhanced. From the viewpoint of enhancing the effect of suppressing liquid decrease, it is preferable to use a condensate of a naphthalene compound having a sulfur-containing group and having a hydroxy group and/or an amino group with an aldehyde compound.

The sulfur-containing group may be directly bonded to the aromatic ring contained in the compound, and for example, may be bonded to the aromatic ring as an alkyl chain having a sulfur-containing group. The sulfur-containing group is not particularly limited, and examples thereof include a sulfonyl group, a sulfonic acid group or a salt thereof, and the like.

In addition, as the organic expander, for example, at least a condensate containing at least one selected from the group consisting of units of the bisarene compound and units of a monocyclic aromatic compound (hydroxyarene compound and/or aminoarene compound, or the like) may be used. The organic expander may contain at least a condensate containing a unit of a bisarene compound and a unit of a monocyclic aromatic compound (among them, hydroxyarene compound). Examples of such a condensate include a condensate of a bisarene compound and a monocyclic aromatic compound with an aldehyde compound. As the hydroxyarene compound, a phenol sulfonic acid compound (phenol sulfonic acid, a substituted product thereof, or the like) is preferable. As the aminoarene compound, aminobenzenesulfonic acid, alkylaminobenzenesulfonic acid, and the like are preferable. As the monocyclic aromatic compound, a hydroxyarene compound is preferable.

The negative electrode material may contain, for example, the organic expander (first organic expander) having a sulfur element content of 2,000 pmol/g or more among the organic expanders. When the first organic expander and the polymer compound are used in combination, the deterioration of the charge acceptability can be further suppressed. The charge acceptability is governed by a dissolution rate of lead sulfate during charge in the negative electrode plate. In a case where an amount of discharge is the same, when the first organic expander is used, a particle size of lead sulfate generated during discharge is smaller than that when the organic expander (second organic expander) having a small sulfur element content (for example, less than 2,000 $\mu$mol/g, preferably 1,000 $\mu$mol/g or less) is used, and a specific surface area increases. Thus, in the case of using the first organic expander, lead sulfate is less likely to be coated with the polymer compound than in the case of using the second organic expander. Thus, it is considered that dissolution of lead sulfate is hardly inhibited, and the deterioration of the charge acceptability is further suppressed. Examples of the first organic expander include the synthetic organic expander describe above (such as the condensate).

The sulfur element content of the first organic expander may be 2,000 pmol/g or more, and is preferably 3,000 pmol/g or more. The upper limit of the sulfur element content of the organic expander is not particularly limited, and is preferably 9,000 $\mu$mol/g or less, and more preferably 8,000 $\mu$mol/g or less or 7,000 $\mu$mol/g or less from the viewpoint of further enhancing an effect of suppressing the liquid decrease. These lower limit values and upper limit values can be combined arbitrarily. By combining such an organic expander and the polymer compound, the dissolution of lead sulfate during charge is less likely to be inhibited, so that the deterioration of the charge acceptability can be further suppressed.

The sulfur element content of the first organic expander may be, for example, 2,000 pmol/g or more (or 3,000 pmol/g or more) and 9,000 pmol/g or less, 2,000 pmol/g or more (or 3,000 pmol/g or more) and 8,000 pmol/g or less, or 2,000 pmol/g or more (or 3,000 pmol/g or more) and 7,000 pmol/g or less.

The first organic expander may contain a condensate containing a unit of an aromatic compound having a sulfur-containing group, and the condensate may contain at least a unit of a bisphenol compound as the unit of the aromatic compound. Such a condensate is more advantageous in suppressing the deterioration of the low temperature HR discharge performance after the high temperature light load test because the low temperature high rate (HR) discharge performance is not impaired even when the condensate experiences an environment higher than normal temperature. When the organic additive is unevenly distributed in the lead pores, movement of ions (such as lead ions and sulfate ions) is inhibited by steric hindrance of the unevenly distributed organic additive. Thus, the low temperature HR discharge performance is also deteriorated. When the content of the organic additive is increased in order to secure a sufficient effect of reducing the amount of overcharge, movement of ions in the pores is further inhibited, and the low temperature HR discharge performance is also deteriorated. In the lead-acid battery according to one aspect and another aspect of the present invention, since the above polymer compound is used, the uneven distribution of the polymer compound is suppressed. Thus, by combining the polymer compound and the condensate described above, it is also possible to effectively suppress deterioration of the low temperature HR discharge performance. Although the excess polymer compound has an action of deteriorating the low temperature HR discharge performance after the high temperature light load test, when the product: $S \times C$ of the specific surface area and the content per 1 g of the negative electrode material is large, the effect of suppressing the deterioration of the low temperature HR discharge performance can be further enhanced. This is considered to be because the polymer compound is easily fixed to the surface of the carbonaceous material, so that a layer of the polymer compound on the lead surface can be kept thinner.

A weight average molecular weight (Mw) of the first organic expander is preferably, for example, 7,000 or more. The Mw of the first organic expander is, for example, 100,000 or less, and may be 20,000 or less.

In the present specification, the Mw of the organic expander is determined by GPC. A standard substance used for determining the Mw is sodium polystyrene sulfonate.

The Mw is measured under the following conditions using the following apparatus.

GPC apparatus: Build-up GPC system SD-8022/DP-8020/AS-8020/CO-8020/UV-8020 (manufactured by Tosoh Corporation)

Column: TSKgel G4000SWXL, G2000SWXL (7.8 mm I.D. × 30 cm) (manufactured by Tosoh Corporation)
Detector: UV detector, $\lambda$ = 210 nm
Eluent: Mixed solution of NaCl aqueous solution having a concentration of 1 mol/L: acetonitrile (volume ratio = 7:3)
Flow rate: 1 mL/min.
Concentration: 10 mg/mL
Injection amount: 10 pL
Standard substance: Na polystyrene sulfonate (Mw = 275,000, 35,000, 12,500, 7,500, 5,200, 1,680)

The negative electrode material can contain, for example, the organic expander (second organic expander) having a sulfur element content of less than 2,000 pmol/g. Examples of the second organic expander include lignins and synthetic organic expanders (in particular, lignins) among the organic expanders described above. The sulfur element content of the second organic expander is preferably 1,000 pmol/g or less, and may be 800 pmol/g or less. The lower limit of the sulfur element content in the second organic expander is not particularly limited, and is, for example, 400 pmol/g or more. When the second organic expander and the polymer compound are used in combination, a particle size of a colloid can be reduced, so that the effect of suppressing the deterioration of the low temperature HR discharge performance can be further enhanced.

The Mw of the second organic expander is, for example, less than 7,000. The Mw of the second organic expander is, for example, 3,000 or more.

The sulfur element content in the organic expander being X pmol/g means that the content of the sulfur element contained per 1 g of the organic expander is X pmol.

The negative electrode material may contain the second organic expander in addition to the first organic expander. When the first organic expander and the second organic expander are used in combination with the polymer compound, the effect of suppressing the deterioration of the charge acceptability can be synergistically enhanced. The first organic expander and the second organic expander form different kinds of colloids in the negative electrode material. At a boundary where different types of colloids are in contact with each other, adhesion between the colloids is lower than that at a boundary where the same type of colloids are in contact with each other. Thus, lead ions easily pass through the boundary where different types of colloids are in contact with each other. Thus, the dissolution of lead sulfate easily proceeds. As a result, it is considered that a synergistic effect in suppressing the deterioration of the charge acceptability is obtained.

When the first organic expander and the second organic expander are used in combination, the mass ratio thereof can be arbitrarily selected. From the viewpoint of easily securing the synergistic effect in suppressing the deterioration of the charge acceptability, a ratio of the first organic expander to a total amount of the first organic expander and the second organic expander is preferably 20% by mass or more, and may be 25% by mass or more. From the same viewpoint, the ratio of the first organic expander to the total amount of the first organic expander and the second organic expander is preferably 80% by mass or less, and may be 75% by mass or less.

The ratio of the first organic expander to the total amount of the first organic expander and the second organic expander may be 20% by mass or more and 80% by mass or less (or 75% by mass or less), or 25% by mass or more and 80% by mass or less (or 75% by mass or less).

The content of the organic expander contained in the negative electrode material is, for example, 0.01% by mass or more and may be 0.05% by mass or more. The content of the organic expander is, for example, 1.0% by mass or less and may be 0.5% by mass or less. These lower limit values and upper limit values can be combined arbitrarily.

The content of the organic expander contained in the negative electrode material may be 0.01% by mass or more and 1.0% by mass or less, 0.05% by mass or more and 1.0% by mass or less, 0.01% by mass or more and 0.5% by mass or less, or 0.05% by mass or more and 0.5% by mass or less.

(Barium sulfate)

The content of barium sulfate in the negative electrode material is, for example, 0.05% by mass or more and may be 0.10% by mass or more. The content of barium sulfate in the negative electrode material is 3% by mass or less and may be 2% by mass or less. These lower limit values and upper limit values can be combined arbitrarily.

The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

(Analysis of constituent components of negative electrode material)

Hereinafter, a method of analyzing the negative electrode material or constituent components thereof will be described. Prior to analysis, a lead-acid battery after formation is fully charged and then disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 $\pm$ 5°C in a reduced pressure environment for about six hours. When an attached member is included after drying, the attached member is removed from the negative electrode plate by peeling. Next, the negative electrode material is separated from the negative electrode plate to obtain a sample (hereinafter also referred to as sample A.). The sample A is ground as necessary and subjected to analysis.

(1) Analysis of polymer compound

(1-1) Qualitative analysis of polymer compound

150.0 $\pm$ 0.1 mL of chloroform is added to 100.0 $\pm$ 0.1 g of the pulverized sample A, and the mixture is stirred at 20 $\pm$ 5°C for 16 hours to extract a polymer compound. Thereafter, the solid content is removed by filtration. For a chloroform solution in which the polymer compound obtained by the extraction is dissolved or a polymer compound obtained by drying the chloroform solution, information is obtained from an infrared spectroscopic spectrum, an ultraviolet-visible absorption spectrum, an NMR spectrum, LC-MS and/or pyrolysis GC-MS, and the like to specify the polymer compound.

Chloroform is distilled off under reduced pressure from the chloroform solution in which the polymer compound obtained by the extraction is dissolved to recover a chloroform soluble component. The chloroform soluble component is dissolved in deuterated chloroform, and a $^1$H-NMR spectrum is measured under the following conditions. From this $^1$H-NMR spectrum, a peak with a chemical shift in the range of 3.2 ppm or more and 3.8 ppm or less is confirmed. Also, from the peak in this range, the type of the oxy $C_{2-4}$ alkylene unit is specified.

Apparatus: type AL400 nuclear magnetic resonance spectrometer, manufactured by JEOL Ltd.

Observation frequency: 395.88 MHz
Pulse width: 6.30 $\mu$s
Pulse repeating time: 74.1411 seconds
Number of integrations: 32
Measurement temperature: room temperature (20 to 35°C)
Reference: 7.24 ppm
Sample tube diameter: 5 mm

From the $^1$H-NMR spectrum, an integrated value ($V_1$) of the peak at which the chemical shift is present in the range of 3.2 ppm or more and 3.8 ppm or less is determined. In addition, for each of the hydrogen atoms of the $-CH_2-$ group and the -CH< group bonded to the oxygen atom bonded to the terminal group of the polymer compound, the sum ($V_2$) of integrated values of peaks in the $^1$H-NMR spectrum is determined. Then, from $V_1$ and $V_2$, a ratio of $V_1$ to the sum of $V_1$ and $V_2$ (= $V_1/(V_1 + V_2) \times 100$ (%)) is determined.

When the integrated value of the peak in the $^1$H-NMR spectrum is determined in the qualitative analysis, two points having no significant signal are determined so as to sandwich the corresponding peak in the $^1$H-NMR spectrum, and each integrated value is calculated using a straight line connecting the two points as a baseline. For example, for the peak in which the chemical shift is present in a range of 3.2 ppm to 3.8 ppm, a straight line connecting two points of 3.2 ppm and 3.8 ppm in the spectrum is used as a baseline. For example, for a peak in which the chemical shift is present in a range of more than 3.8 ppm and 4.0 ppm or less, a straight line connecting two points of 3.8 ppm and 4.0 ppm in the spectrum is used as a baseline.

(1-2) Quantitative analysis of polymer compound

An appropriate amount of the chloroform soluble component is dissolved in deuterated chloroform together with tetrachloroethane (TCE) of $m_r$ (g) measured with an accuracy of $\pm$ 0.0001 g, and a $^1$H-NMR spectrum is measured. An integrated value ($S_a$) of the peak in which the chemical shift is present in the range of 3.2 to 3.8 ppm and an integrated value ($S_r$) of a peak derived from TCE are determined, and mass-based content $C_n$ (ppm) of the polymer compound in the negative electrode material is determined from the following formula.

$$C_n = S_a/S_r \times N_r/N_a \times M_a/M_r \times m_r/m \times 1,000,000$$

(wherein $M_a$ is a molecular weight of a structure showing a peak in a chemical shift range of 3.2 to 3.8 ppm (more specifically, a molecular weight of the repeating structure of oxy $C_{2-4}$ alkylene units), and $N_a$ is the number of hydrogen atoms bonded to a carbon atom of a main chain of the repeating structure. $N_r$ and $M_r$ are the number of hydrogen contained in a molecule of reference substance and the molecular weight of the reference substance, respectively, and m (g) is the mass of the negative electrode material used for extraction.)

Since the reference substance in this analysis is TCE, $N_r = 2$ and $M_r = 168$. In addition, m = 100.

For example, when the polymer compound is polypropylene glycol, $M_a$ is 58, and $N_a$ is 3. When the polymer compound is polyethylene glycol, $M_a$ is 44, and $N_a$ is 4. In the case of a copolymer, $N_a$ is a value obtained by averaging $N_a$ values of each monomer unit using a molar ratio (mol%) of each monomer unit contained in the repeating structure, and $M_a$ is determined according to the type of each monomer unit.

In the quantitative analysis, the integrated value of the peak in the $^1$H-NMR spectrum is determined using data processing software "ALICE" manufactured by JEOL Ltd.

(1-3) Mn Measurement of polymer compound

GPC Measurement of the polymer compound is performed using the following apparatus under the following conditions. Separately, a calibration curve (standard curve) is prepared from a plot of Mn of the standard substance and elution time. The Mn of the polymer compound is calculated based on the standard curve and the GPC measurement result of the polymer compound.

Analysis system: 20A system (manufactured by Shimadzu Corporation)
Column: two columns of GPC KF-805L (manufactured by Shodex) connected in series
Column temperature: 30 °C
Mobile phase: tetrahydrofuran
Flow rate: 1 mL/min.
Concentration: 0.20% by mass
Injection amount: 10 pL
Standard substance: polyethylene glycol (Mn = 2,000,000, 200,000, 20,000, 2,000, 200)
Detector: differential refractive index detector (Shodex RI-201H, manufactured by Shodex)

(2) Analysis of carbonaceous material

(2-1) Separation and quantitative determination of carbonaceous material

The lead-acid battery in the fully charged state is disassembled, the formed negative electrode plate is taken out, sulfuric acid is removed by washing with water, and the negative electrode plate is dried under vacuum or under an inert gas atmosphere. When an attached member is included after drying, the attached member is removed from the negative electrode plate by peeling. Next, the negative electrode material is collected from the dried negative electrode plate and pulverized. 30 mL of a nitric acid aqueous solution having a concentration of 60% by mass is added per 5 g of the pulverized sample, and the mixture is heated at 70°C. 10 g of disodium ethylenediaminetetraacetate, 30 mL of ammonia water having a concentration of 28% by mass, and 100 mL of water are added per 5 g of the pulverized sample, and heating is continued to dissolve a soluble component. The sample thus pretreated is collected by filtration. The collected sample is passed through a sieve with an opening of 500 pm to remove components having a large size such as a reinforcing material, and components having passed through the sieve are collected as the carbonaceous materials.

When the collected carbonaceous material is sieved by a wet method using a sieve with an opening of 32 $\mu$m, the carbonaceous material remaining on the sieve without passing through a sieve mesh is defined as the first carbonaceous material, and the carbonaceous material passing through the sieve mesh is defined as the second carbonaceous material. That is, the particle size of each carbonaceous material is based on the size of the mesh opening of the sieve. For wet sieving, JIS Z 8815:1994 can be referred to.

Specifically, the carbonaceous material is placed on a sieve having an opening of 32 pm, and sieved by gently shaking the sieve for 5 minutes while sprinkling ion-exchange water. The first carbonaceous material remaining on the sieve is collected from the sieve by pouring ion-exchange water over the sieve, and separated from the ion-exchange water by filtration. The second carbonaceous material that has passed through the sieve is collected by filtration using a membrane filter (opening: 0.1 pm) made of nitrocellulose. The collected first carbonaceous material and the collected second carbonaceous material are each dried at a temperature of 100°C for 2 hours. As the sieve having an opening of 32 pm, a sieve provided with a sieve mesh having a nominal opening of 32 pm, which is defined in JIS Z 8801-1:2006, is used.

The content C of the carbonaceous material in the negative electrode material is determined by measuring the mass of each carbonaceous material separated by the above procedure and calculating the mass ratio of a total of the mass in the pulverized sample. The ratio of the first carbonaceous material in the whole carbonaceous material is determined by calculating a ratio (% by mass) of the measured mass of the first carbonaceous material in the mass of the carbonaceous material.

(2-2) BET specific surface area S of carbonaceous material

The BET specific surface area S of the carbonaceous material is determined using a BET equation by the gas adsorption method using the carbonaceous material separated by the procedure of (2-1) described above. The carbonaceous material is pretreated by heating at a temperature of 150°C for 1 hour in a nitrogen flow. Using the pretreated carbonaceous material, the BET specific surface area of the carbonaceous material is determined by the following apparatus under the following conditions.

Measuring apparatus: TriStar 3000 manufactured by Micromeritics Instrument Corp.

Adsorption gas: nitrogen gas having a purity of 99.99% or more
Adsorption temperature: liquid nitrogen boiling point temperature (77 K)
Method for calculating BET specific surface area: in accordance with 7.2 of JIS Z 8830:2013

(3) Analysis of organic expander

(3-1) Qualitative analysis of organic expander in negative electrode material

Sample A is immersed in a 1 mol/L sodium hydroxide (NaOH) aqueous solution to extract the organic expander. Next, the first organic expander and the second organic expander are separated from the extract. For each separated material containing each organic expander, insoluble components are removed by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample of the organic expander.

A type of the organic expander is specified using a combination of information obtained from an infrared spectroscopic spectrum measured using the powder sample of the organic expander obtained as described above, an ultraviolet-visible absorption spectrum measured by an ultraviolet-visible absorption spectrometer after the powder sample is diluted with distilled water or the like, an NMR spectrum of a solution obtained by dissolution with a predetermined solvent such as heavy water, and the like.

The first organic expander and the second organic expander are separated from the extract as follows. First, the extract is measured by infrared spectroscopy, NMR, and/or GC-MS to determine whether or not a plurality of types of organic expanders are contained. Next, a molecular weight distribution is measured by GPC analysis of the extract, and if the plurality of types of organic expanders can be separated by molecular weight, the organic expander is separated by column chromatography based on a difference in molecular weight. When it is difficult to separate the organic expander due to the difference in molecular weight, one of the organic expanders is separated by a precipitation separation method using a difference in solubility that varies depending on the type of the functional group and/or the amount of the functional group of the organic expander. Specifically, an aqueous sulfuric acid solution is added dropwise to a mixture obtained by dissolving the extract in an NaOH aqueous solution to adjust the pH of the mixture, thereby aggregating and separating one of the organic expanders. The insoluble component is removed by filtration as described above from the separated material dissolved again in the NaOH aqueous solution. The remaining solution after separating one of the organic expanders is concentrated. The obtained concentrate contains the other organic expander, and the insoluble component is removed from the concentrate by filtration as described above.

(3-2) Quantitative determination of content of organic expander in negative electrode material

Similarly to (3-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured using the ultraviolet-visible absorption spectrum by creating a calibration curve using the organic expander extracted from the negative electrode of the battery and a separately available organic polymer in which the ultraviolet-visible absorption spectrum, the infrared spectroscopic spectrum, the NMR spectrum, and the like exhibit similar shapes.

(3-3) Content of sulfur element in organic expander

Similarly to (3-1) above, after a powder sample of the organic expander is obtained, sulfur element in 0.1 g of the organic expander is converted into sulfuric acid by an oxygen combustion flask method. At this time, the powder sample is burned in a flask containing an adsorbent to obtain an eluate in which sulfate ions are dissolved in the adsorbent. Next, the eluate is titrated with barium perchlorate using thorin as an indicator to determine the content (C1) of the sulfur element in 0.1 g of the organic expander. Next, C1 is multiplied by 10 to calculate the content ($\mu$mol/g) of the sulfur element in the organic expander per 1 g.

(4) Quantitative determination of barium sulfate

The uncrushed sample A is crushed, 50 ml of nitric acid having a concentration of 20% by mass is added to 10 g of the crushed sample A, and the mixture is heated for about 20 minutes to dissolve a lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C $\pm$ 5°C. The filtered sample is a mixed sample of the carbonaceous material and barium sulfate. A mass of the mixed sample is measured by subtracting the mass of the membrane filter from the total mass of dried mixed sample and the membrane filter. Thereafter, the dried mixed sample is placed in a crucible together with a membrane filter and is burned and incinerated at 700°C or higher. The residue remaining is barium oxide. The mass of barium sulfate is determined by converting the mass of barium oxide to the mass of barium sulfate.

(Others)

The negative electrode plate can be formed in such a manner that a negative current collector is coated or filled with a negative electrode paste, which is then cured and dried to prepare a non-formed negative electrode plate, and thereafter, the non-formed negative electrode plate is formed. The negative electrode paste is prepared by adding water and sulfuric acid to lead powder and an organic expander, and various additives as necessary, and kneading the mixture. At the time of curing, it is preferable to cure the non-formed negative electrode plate at a higher temperature than room temperature and high humidity.

The formation can be performed by charging the element in a state where the element including the non-formed negative electrode plate immersed in the electrolyte solution containing sulfuric acid in the container of the lead-acid battery. However, the formation may be performed before the lead-acid battery or the element is assembled. The formation produces spongy lead.

(Positive electrode plate)

The positive electrode plate of a lead-acid battery can be classified into a paste type, a clad type, and the like. The paste-type positive electrode plate includes a positive current collector and a positive electrode material. The positive electrode material is held by the positive current collector. In the paste-type positive electrode plate, the positive electrode material is obtained by removing the positive current collector from the positive electrode plate. The positive current collector may be formed by casting lead (Pb) or a lead alloy, or may be formed by processing a lead sheet or a lead alloy sheet. Examples of the processing method include expanding processing and punching processing. It is preferable to use a grid-like current collector as the positive current collector because the positive electrode material is easily supported. The clad-type positive electrode plate includes a plurality of porous tubes, a spine inserted into each tube, a current collector coupling the plurality of spines, a positive electrode material with which a spine inserted tube is filled, and a joint that couples the plurality of tubes. In the clad-type positive electrode plate, the positive electrode material is a material obtained by removing the tube, the spine, the current collector, and the joint. In the clad-type positive electrode plate, the spine and the current collector may be collectively referred to as a positive current collector.

A member such as a mat or a pasting paper may be stuck to the positive electrode plate. Such a member (sticking member) is used integrally with the positive electrode plate and is thus assumed to be included in the positive electrode plate. Also, when the positive electrode plate includes such a member, the positive electrode material is obtained by removing the positive current collector and the sticking member from the positive electrode plate in the paste-type positive electrode plate.

As a lead alloy used for the positive current collector, a Pb-Sb alloy, a Pb-Ca alloy, or a Pb-Ca-Sn alloy are preferred in terms of corrosion resistance and mechanical strength. The positive current collector may include a surface layer. The surface layer and the inner layer of the positive current collector may have different compositions. The surface layer may be formed in a part of the positive current collector. The surface layer may be formed only on the grid portion, only on the lug portion, or only on the frame rib portion of the positive current collector.

The positive electrode material contained in the positive electrode plate contains a positive active material (lead dioxide or lead sulfate) that exhibits a capacity through a redox reaction. The positive electrode material may optionally contain another additive.

A non-formed paste-type positive electrode plate is obtained by filling a positive current collector with a positive electrode paste, and curing and drying the paste. The positive electrode paste is prepared by kneading lead powder, an additive, water, and sulfuric acid. A non-formed clad-type positive electrode plate is formed by filling a porous tube, into which a spine connected by a current collector is inserted with lead powder or a slurry-like lead powder, and joining a plurality of tubes with a joint. Thereafter, the positive electrode plate is obtained by forming the non-formed positive electrode plates. The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

(Separator)

The separator can be disposed between the negative electrode plate and the positive electrode plate. As the separator, a nonwoven fabric, a microporous membrane, and/or the like are used. The thickness and the number of the separators interposed between the negative electrode plate and the positive electrode plate may be selected in accordance with the distance between the electrodes.

The nonwoven fabric is a mat in which fibers are intertwined without being woven and is mainly made of fibers. In the nonwoven fabric, for example, 60% by mass or more of the nonwoven fabric is formed of fibers. As the fibers, there can be used glass fibers, polymer fibers (polyolefin fiber, acrylic fiber, polyester fiber such as polyethylene terephthalate fiber, etc.), pulp fibers, and the like. Among them, glass fibers are preferable. The nonwoven fabric may contain components in addition to the fibers, such as acid-resistant inorganic powder, a polymer as a binder, and the like.

On the other hand, the microporous film is a porous sheet mainly made of components except for fiber components and is obtained by, for example, extrusion molding a composition containing, for example, a pore-forming additive (polymer powder, oil, and/or the like) into a sheet shape and then removing the pore-forming additive to form pores. The microporous film is preferably made of a material having acid resistance and is preferably composed mainly of a polymer component. As the polymer component, a polyolefin such as polyethylene or polypropylene is preferable.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded portion is along the horizontal direction of the lead-acid battery (e.g., such that the bent portion may be parallel to the horizontal direction), and the separator may be disposed such that the folded portion is along the vertical direction (e.g., such that the bent portion is parallel to the vertical direction). In the separator folded in the bellows shape, recesses are alternately formed on both main surface sides of the separator. Since the lugs are usually formed on the upper portion of the positive electrode plate and the negative electrode plate, when the separator is disposed such that the folded portions are along the horizontal direction of the lead-acid battery, the positive electrode plate and the negative electrode plate are each disposed only in the recess on one main surface side of the separator (i.e., a double separator is interposed between the adjacent positive and negative plates). When the separator is disposed such that the folded portion is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative plates). When the bag-shaped separator is used, the bag-shaped separator may house the positive electrode plate or may house the negative electrode plate.

In the present specification, the up-down direction of the plate means the up-down direction of the lead-acid battery in the vertical direction.


(Electrolyte solution)

The electrolyte solution is an aqueous solution containing sulfuric acid and may be gelled as necessary.

The polymer compound may be contained in the electrolyte solution. Similarly to the case of the negative electrode material, the source of the polymer compound contained in the electrolyte solution is not particularly limited.

The concentration of the polymer compound in the electrolyte solution may be, for example, 500 ppm or less, 300 ppm or less, or 200 ppm or less on a mass basis. As described above, even when the amount of the polymer compound contained in the electrolyte solution is small, the generation of hydrogen gas can be suppressed, and the deterioration of the charge acceptability can be suppressed. The concentration of the polymer compound in the electrolyte solution may be 1 ppm or more or 5 ppm or more on a mass basis. These upper limit values and lower limit values can be combined arbitrarily.

The concentration of the polymer compound in the electrolyte solution may be 1 ppm or more and 500 ppm or less, 1 ppm or more and 300 ppm or less, 1 ppm or more and 200 ppm or less, 5 ppm or more and 500 ppm or less, 5 ppm or more and 300 ppm or less, or 5 ppm or more and 200 ppm or less on a mass basis.

It is also preferable that the concentration of the polymer compound in the electrolyte solution is 100 ppm or more. At this time, the polymer compound preferably contains at least a compound having Mn of 1,000 or more and 5,000 or less. Since the polymer compound having Mn of 5,000 or less is easily dissolved in the electrolyte solution and easily moves in the electrolyte solution, the polymer compound moves into the negative electrode material and can further enhance the effect of suppressing the generation of hydrogen gas. In the polymer compound having Mn of 1,000 or more, it is considered that the adsorbability to lead is further enhanced, and the effect of suppressing the generation of hydrogen gas can be further enhanced. When the lead-acid battery is used for a long period of time, the structural change of the negative active material gradually proceeds, and the polymer compound tends to be easily eluted from the negative electrode plate. However, when the electrolyte solution contains some concentration of polymer compound, elution of the polymer compound from the negative electrode plate can be suppressed, the polymer compound can be retained in the negative electrode material, and the polymer compound can be replenished from the electrolyte solution to the negative electrode plate.

The concentration of the polymer compound in the electrolyte solution may be, for example, 100 ppm or more, may be 200 ppm or more or 500 ppm or more, may be more than 500 ppm, or may be 600 ppm or more on a mass basis. The polymer compound preferably contains at least a compound having Mn of 1,000 or more and 5,000 or less (for example, 4,000 or less or 3,000 or less). When the polymer compound is contained in the negative electrode material and the electrolyte solution contains some concentration of polymer compound, elution of the polymer compound from the negative electrode plate can be suppressed, and the polymer compound can be replenished from the electrolyte solution to the negative electrode plate.

The concentration of the polymer compound in the electrolyte solution may be, for example, 5,000 ppm or less, 4,000 ppm or less, 3,000 ppm or less, 2,500 ppm or less, or 2,400 ppm or less on a mass basis.

The concentration of the polymer compound in the electrolyte solution may be, on a mass basis, 100 ppm or more (or 200 ppm or more) and 5,000 ppm or less, 100 ppm or more (or 200 ppm or more) and 4,000 ppm or less, 100 ppm or more (or 200 ppm or more) and 3,000 ppm or less, 100 ppm or more (or 200 ppm or more) and 2,500 ppm or less, 100 ppm or more (or 200 ppm or more) and 2,400 ppm or less, 500 ppm or more (or more than 500 ppm) and 5,000 ppm or less, 500 ppm or more (or more than 500 ppm) and 4,000 ppm or less, 500 ppm or more (or more than 500 ppm) and 3,000 ppm or less, 500 ppm or more (or more than 500 ppm) and 2,500 ppm or less, 500 ppm or more (or more than 500 ppm) and 2,400 ppm or less, 600 ppm or more and 5,000 ppm or less (or 4,000 ppm or less), 600 ppm or more and 3,000 ppm or less (or 2,500 ppm or less), or 600 ppm or more and 2,400 ppm or less.

The concentration of the polymer compound in the electrolyte solution is determined for the lead-acid battery in the fully charged state.

Regarding the concentration of the polymer compound in the electrolyte solution, chloroform is added to and mixed with a predetermined amount ($m_1$ (g)) of the electrolyte solution taken out from the formed lead-acid battery in a fully charged state, the mixture is allowed to stand to be separated into two layers, and then only the chloroform layer is taken out. After repeating this operation several times, chloroform is distilled off under reduced pressure to obtain a chloroform soluble content. An appropriate amount of the chloroform soluble component is dissolved in deuterated chloroform together with 0.0212 ± 0.0001 g of TCE, and a $^1$H-NMR spectrum is measured. An integrated value ($S_a$) of the peak in which the chemical shift is present in the range of 3.2 to 3.8 ppm and an integrated value ($S_r$) of a peak derived from TCE are determined, and content $C_e$ of the polymer compound in the electrolyte solution is determined from the following formula.

$$C_e = S_a/S_r \times N_r/N_a \times M_a/M_r \times m_r/m_1 \times 1{,}000{,}000$$

(wherein $M_a$ and $N_a$ are the same as described above.)

The electrolyte solution may contain cations (e.g., metal cations such as sodium ion, lithium ion, magnesium ion, and/or aluminum ion) and/or anions (e.g., anions other than sulfate anions such as phosphate ions) as necessary.

The specific gravity of the electrolyte solution in the lead-acid battery in the fully charged state at 20°C is, for example, 1.20 or more and may be 1.25 or more. The specific gravity of the electrolyte solution at 20°C is 1.35 or less and preferably 1.32 or less. These lower limit values and upper limit values can be combined arbitrarily. The specific gravity of the electrolyte solution at 20°C may be 1.20 or more and 1.35 or less, 1.20 or more and 1.32 or less, 1.25 or more and 1.35 or less, or 1.25 or more and 1.32 or less.

The lead-acid battery can be obtained by a production method including a step of assembling a lead-acid battery by housing a positive electrode plate, a negative electrode plate, and an electrolyte solution in a container. In the assembly process of the lead-acid battery, the separator is usually disposed so as to be interposed between the positive electrode plate and the negative electrode plate. The assembly process of the lead-acid battery may include a step of forming the positive electrode plate and/or the negative electrode plate as necessary after the step of housing the positive electrode plate, the negative electrode plate, and the electrolyte solution in the container. The positive electrode plate, the negative electrode plate, the electrolyte solution, and the separator are each prepared before being housed in the container.

Fig. 1 shows an appearance of an example of a lead-acid battery according to an embodiment of the present invention.

A lead-acid battery 1 includes a container 12 that houses an element 11 and an electrolyte solution (not shown). The inside of the container 12 is partitioned by partitions 13 into a plurality of cell chambers 14. Each of the cell chambers 14 contains one element 11. An opening of the container 12 is closed with a lid 15 having a negative electrode terminal 16 and a positive electrode terminal 17. The lid 15 is provided with a vent plug 18 for each cell chamber. At the time of water addition, the vent plug 18 is removed to supply a water addition liquid. The vent plug 18 may have a function of discharging gas generated in the cell chamber 14 to the outside of the battery.

The element 11 is configured by laminating a plurality of negative electrode plates 2 and positive electrode plates 3 with a separator 4 interposed therebetween. Here, the bag-shaped separator 4 housing the negative electrode plate 2 is shown, but the form of the separator is not particularly limited. In the cell chamber 14 located at one end of the container 12, a negative electrode shelf portion 6 for connecting the plurality of negative electrode plates 2 in parallel is connected to a penetrating connection body 8, and a positive electrode shelf portion 5 for connecting the plurality of positive electrode plates 3 in parallel is connected to a positive pole 7. The positive pole 7 is connected to the positive electrode terminal 17 outside the lid 15. In the cell chamber 14 located at the other end of the container 12, a negative pole 9 is connected to the negative electrode shelf portion 6, and the penetrating connection body 8 is connected to the positive electrode shelf portion 5. The negative pole 9 is connected to the negative electrode terminal 16 outside the lid 15. Each of the penetrating connection bodies 8 passes through a through-hole provided in the partition 13 to connect the elements 11 of the adjacent cell chambers 14 in series.

The positive electrode shelf portion 5 is formed by welding the lugs, provided on the upper portions of the respective positive electrode plates 3, to each other by a cast-on-strap method or a burning method. The negative electrode shelf portion 6 is also formed by welding the lugs, provided on the upper portions of the respective negative electrode plates 2, to each other in accordance with the case of the positive electrode shelf portion 5.

The lead-acid battery according to one aspect of the present invention will be described below.

(1) A lead-acid battery including a positive electrode plate, a negative electrode plate, and an electrolyte solution,

in which the negative electrode plate includes a negative electrode material,
the negative electrode material contains a polymer compound and a carbonaceous material, and

the polymer compound has a peak in a range of 3.2 ppm or more and 3.8 ppm or less in a chemical shift of $^1$H-NMR spectrum.

(2) In (1) above, the polymer compound may contain an oxygen atom bonded to a terminal group and a $-CH_2-$ group and/or a -CH< group bonded to the oxygen atom, and in the $^1$H-NMR spectrum, a ratio of an integrated value of the peak to a sum of the integrated value of the peak, an integrated value of a peak of a hydrogen atom of the $-CH_2-$ group, and an integral value of a peak of a hydrogen atom of the -CH< group may be 50% or more, 80% or more, 85% or more, or 90% or more.

(3) In (1) or (2) above, the polymer compound may contain a repeating structure of oxy $C_{2-4}$ alkylene units.

(4) A lead-acid battery including a positive electrode plate, a negative electrode plate, and an electrolyte solution,

in which the negative electrode plate includes a negative electrode material, and
the negative electrode material contains a carbonaceous material and a polymer compound having a repeating structure of oxy $C_{2-4}$ alkylene units.

(5) In (3) or (4) above, the polymer compound may contain at least one selected from the group consisting of an etherified product of a hydroxy compound having a repeating structure of the oxy $C_{2-4}$ alkylene units and an esterified product of a hydroxy compound having the repeating structure of the oxy $C_{2-4}$ alkylene units, and
the hydroxy compound may be at least one selected from the group consisting of a poly $C_{2-4}$ alkylene glycol, a copolymer having a repeating structure of oxy $C_{2-4}$ alkylene, and a $C_{2-4}$ alkylene oxide adduct of a polyol.

(6) A lead-acid battery including a positive electrode plate, a negative electrode plate, and an electrolyte solution,

in which the negative electrode plate includes a negative electrode material,
the negative electrode material contains a polymer compound and a carbonaceous material,
the polymer compound contains at least one selected from the group consisting of an etherified product of a hydroxy compound having a repeating structure of oxy $C_{2-4}$ alkylene units and an esterified product of a hydroxy compound having the repeating structure of the oxy $C_{2-4}$ alkylene units, and
the hydroxy compound is at least one selected from the group consisting of a poly $C_{2-4}$ alkylene glycol, a copolymer having a repeating structure of oxy $C_{2-4}$ alkylene, and a $C_{2-4}$ alkylene oxide adduct of a polyol.

(7) In (5) or (6) above, the etherified product may have an $-OR^2$ group (wherein $R^2$ is an organic group) in which an -OH group at a terminal of at least a part of the hydroxy compound is etherified, and the organic group $R^2$ may be a hydrocarbon group.

(8) In (5) or (6) above, the esterified product may have an $- OC(=O)-R^3$ group (wherein $R^3$ is an organic group) in which an -OH group at a terminal of at least a part of the hydroxy compound is esterified, and the organic group $R^3$ may be a hydrocarbon group.

(9) In (7) or (8) above, the hydrocarbon group may be an aliphatic hydrocarbon group.

(10) In (9) above, the aliphatic hydrocarbon group may be either linear or branched.

(11) In (9) or (10) above, the number of carbon atoms of the aliphatic hydrocarbon group is, for example, 30 or less, and may be 26 or less or 22 or less, 20 or less or 16 or less, 14 or less or 10 or less, or 8 or less or 6 or less.

(12) In any one of (9) to (11) above, the aliphatic hydrocarbon group may be an alkyl group or an alkenyl group.

(13) In (12) above, the number of carbon atoms of the alkyl group may be 1 or more, and the number of carbon atoms of the alkenyl group may be 2 or more.

(14) In (12) or (13) above, the alkyl group may be at least one selected from the group consisting of methyl, ethyl, n-propyl, i-propyl, n-butyl, i-butyl, s-butyl, t-butyl, n-pentyl, neopentyl, i-pentyl, s-pentyl, 3-pentyl, t-pentyl, n-hexyl, 2-ethylhexyl, n-octyl, n-decyl, i-decyl, lauryl, myristyl, cetyl, stearyl, and behenyl.

(15) In (12) or (13) above, the alkenyl group may be, for example, a $C_{2-30}$ alkenyl group or a $C_{2-26}$ alkenyl group, a $C_{2-22}$ alkenyl group or a $C_{2-20}$ alkenyl group, or a $C_{10-20}$ alkenyl group.

(16) In (12), (13), or (15) above, the alkenyl group may be at least one selected from the group consisting of vinyl, 1-propenyl, allyl, palmitoleyl, and oleyl.

(17) In any one of (3) to (16) above, the repeating structure of the oxy $C_{2-4}$ alkylene units may contain at least a repeating structure of oxypropylene units.

(18) In (17) above, a proportion of the oxypropylene unit in the polymer compound (1 molecule) may be 5 mol% or more, 10 mol% or more, or 20 mol% or more.

(19) In any one of (1) to (18) above, the polymer compound may contain a compound having Mn of 500 or more, a compound having Mn of 600 or more, or a compound having Mn of 1,000 or more.

(20) In (19) above, the Mn of the compound may be 20,000 or less, 15,000 or less, 10,000 or less, 5,000 or less, 4,000 or less, or 3,000 or less.

(21) In any one of (1) to (18) above, the polymer compound may contain at least a compound having Mn of 1,000 or more.

(22) In (21) above, the Mn of the compound may be 1,000 or more and 20,000 or less, 1,000 or more and 15,000 or less, 1,000 or more and 10,000 or less, 1000 or more and 5,000 or less, 1,000 or more and 4,000 or less, or 1,000 or more and 3,000 or less.

(23) In any one of (1) to (22) above, when a specific surface area of the carbonaceous material is S ($m^2$/g) and a content of the carbonaceous material in the negative electrode material is C,

a product: S × C of the specific surface area and the content per 1 g of the negative electrode material may be 0.01 $m^2$/g or more, 0.05 $m^2$/g or more, 0.1 $m^2$/g or more, 0.2 $m^2$/g or more, or 0.3 $m^2$/g or more.

(24) In any one of (1) to (23) above, when the specific surface area of the carbonaceous material is S ($m^2$/g) and the content of the carbonaceous material in the negative electrode material is C,

the product: S × C of the specific surface area and the content per 1 g of the negative electrode material may be 20 $m^2$/g or less, 15 $m^2$/g or less, 10 $m^2$/g or less, 8 $m^2$/g or less, or 4 $m^2$/g or less.

(25) In any one of (1) to (24) above, the specific surface area S of the carbonaceous material may be 0.5 $m^2$/g or more, 0.8 $m^2$/g or more, 1 $m^2$/g or more, 2 $m^2$/g or more, 20 $m^2$/g or more, 25 $m^2$/g or more, 50 $m^2$/g or more, 70 $m^2$/g or more, 100 $m^2$/g or more, or 130 $m^2$/g or more.

(26) In any one of (1) to (25) above, the specific surface area S of the carbonaceous material may be 1,500 $m^2$/g or less, 1,000 $m^2$/g or less, 700 $m^2$/g or less, 650 $m^2$/g or less, 200 $m^2$/g or less, 150 $m^2$/g or less, or 130 $m^2$/g or less.

(27) In any one of (1) to (26) above, a content C of the carbonaceous material in the negative electrode material may be, by percentage (that is, C × 100 (% by mass) may be), 0.01% by mass or more, 0.05% by mass or more, 0.1% by mass or more, 0.3% by mass or more, 0.45% by mass or more, or 1% by mass or more.

(28) In any one of (1) to (27) above, the content C of the carbonaceous material in the negative electrode material may be, by percentage (that is, C × 100 (% by mass) may be), 5% by mass or less, 3.5% by mass or less, or 3% by mass or less.

(29) In any one of (1) to (28) above, the carbonaceous material may include a first carbonaceous material having a particle size of 32 pm or more.

(30) In (29) above, a ratio of the first carbonaceous material in the whole carbonaceous material may be 10% by mass or more, 30% by mass or more, 40% by mass or more, 50% by mass or more, 60% by mass or more, or 70% by mass or more.

(31) In (29) or (30) above, the ratio of the first carbonaceous material in the whole carbonaceous material may be 100% by mass or less or 85% by mass or less.

(32) In any one of (1) to (31) above, the carbonaceous material may include a second carbonaceous material having a particle size of less than 32 pm.

(33) In any one of (1) to (32) above, a content of the polymer compound in the negative electrode material may be 10 ppm or more, 15 ppm or more, 30 ppm or more, 40 ppm or more, 150 ppm or more, or 160 ppm of more on a mass basis.

(34) In any one of (1) to (33) above, the content of the polymer compound in the negative electrode material may be 1000 ppm or less, 850 ppm or less, 800 ppm or less, 750 ppm or less, 700 ppm or less, 650 ppm or less, or 600 ppm or less, 500 ppm or less, or 400 ppm or less on a mass basis.

(35) In any one of (1) to (34) above, the negative electrode material may further contain an organic expander.

(36) In (35) above, the organic expander (or the negative electrode material) may contain a first organic expander having a sulfur element content of 2,000 pmol/g or more or 3,000 pmol/g or more.

(37) In (36) above, the sulfur element content of the first organic expander may be 9,000 μmol/g or less, 8,000 μmol/g or less, or 7,000 μmol/g or less.

(38) In (36) or (37) above, the first organic expander may contain a condensate containing a unit of an aromatic compound having a sulfur-containing group, and the condensate may contain, as the unit of the aromatic compound, at least one selected from the group consisting of a unit of a bisarene compound and a unit of a monocyclic aromatic compound.

(39) In (38) above, the condensate may contain the unit of the bisarene compound and the unit of the monocyclic aromatic compound

(40) In (38) or (39) above, the unit of the monocyclic aromatic compound may include a unit of a hydroxyarene compound.

(41) In (38) above, the sulfur-containing group may contain at least one selected from the group consisting of a sulfonic acid group and a sulfonyl group.

(42) In (35) above, the organic expander (or the negative electrode material) may contain a second organic expander having a sulfur element content of less than 2,000 pmol/g (or 1,000 pmol/g or less or 800 pmol/g or less).

(43) In any one of (36) to (41) above, the organic expander (or the negative electrode material) may further contain a second organic expander having a sulfur element content of less than 2,000 μmol/g (or 1,000 pmol/g or less or 800 pmol/g or less).

(44) In (42) or (43) above, the sulfur element content of the second organic expander may be 400 pmol/g or more.

(45) In (43) above, a ratio of the first organic expander to a total amount of the first organic expander and the second organic expander may be 20% by mass or more or 25% by mass or more.

(46) In (43) or (45) above, the ratio of the first organic expander to the total amount of the first organic expander and the second organic expander may be 80% by mass or less or 75% by mass or less.

(47) In any one of (35) to (46) above, the content of the organic expander contained in the negative electrode material may be 0.01% by mass or more or 0.05% by mass or more.

(48) In any one of (35) to (47) above, the content of the organic expander contained in the negative electrode material may be 1.0% by mass or less or 0.5% by mass or less.

(49) In any one of (1) to (48) above, the electrolyte solution may contain the polymer compound.

(50) In (49) above, a concentration of the polymer compound in the electrolyte solution may be 500 ppm or less, 300 ppm or less, or 200 ppm or less on a mass basis.

(51) In (49) or (50) above, the concentration of the polymer compound in the electrolyte solution may be 1 ppm or more, or 5 ppm or more on a mass basis.

(52) In (49) above, the concentration of the polymer compound in the electrolyte solution may be 100 ppm or more, may be 200 ppm or more or 500 ppm or more, may be more than 500 ppm, or may be 600 ppm or more on a mass basis.

(53) In (52) above, the concentration of the polymer compound in the electrolyte solution may be 5,000 ppm or less, 4,000 ppm or less, 3,000 ppm or less, 2,500 ppm or less, or 2,400 ppm or less on a mass basis.

(54) In (52) or (53) above, the polymer compound may contain at least a compound having Mn of 500 or more (or 600 or more, preferably 1,000 or more).

(55) In (54) above, the Mn of the compound may be 5,000 or less, 4,000 or less, or 3,000 or less.

(56) In any one of (1) to (55) above, the negative electrode material may contain barium sulfate.

(57) In (56) above, the content of the barium sulfate in the negative electrode material may be 0.05% by mass or more or 0.10% by mass or more.

(58) In (56) or (57) above, the content of barium sulfate in the negative electrode material may be 3% by mass or less or 2% by mass or less.

[Example]

Hereinafter, the present invention will be specifically described on the basis of examples and comparative examples, but the present invention is not limited to the following examples.

<<Lead-acid batteries C1 and R1 to R5>>

(1) Preparation of lead-acid battery

(a) Preparation of negative electrode plate

A lead powder as a raw material, barium sulfate, a polymer compound (polypropylene glycol, Mn = 2,000), and an organic expander e1 are mixed with an appropriate amount of a sulfuric acid aqueous solution to obtain a negative electrode paste. At this time, the components are mixed so that the content of the polymer compound in the negative electrode material, which is determined by the procedure described above, is the value shown in Table 2, the content of barium sulfate is 0.6% by mass, and the content of the organic expander is 0.1% by mass. C1 is an example in which a polymer compound is not used. A mesh portion of an expanded grid made of a Pb-Ca-Sn alloy is filled with the negative electrode paste, which is then cured and dried to obtain a non-formed negative electrode plate. As the organic expander e1, a condensate of bisphenol compound having sulfonic acid group introduced and formaldehyde (sulfur element content: 5,000 $\mu$mol/g, Mw = 9,600) is used.

(b) Preparation of positive electrode plate

Lead powder as raw material is mixed with a sulfuric acid aqueous solution to obtain a positive electrode paste. A mesh portion of an expanded grid made of a Pb-Ca-Sn alloy is filled with the positive electrode paste, which is then cured and dried to obtain a non-formed positive electrode plate.

(c) Preparation of test battery

A test battery has a rated voltage of 2 V and a rated 5-hour rate capacity of 32 Ah. An element of the test battery includes seven positive electrode plates and seven negative electrode plates. The negative electrode plate is housed in a bag-shaped separator formed of a polyethylene microporous film, and alternately stacked with the positive electrode plate to form the element. The element is housed in a polypropylene container together with an electrolyte solution (sulfuric acid aqueous solution), and subjected to formation in the container to prepare a flooded-type lead-acid battery. The specific gravity of the electrolyte solution after formation is 1.28 (in terms of 20°C).

In the $^1$H-NMR spectrum of the polymer compound measured by the procedure described above, a peak derived from $-CH_2-$ of the oxypropylene unit is observed in a chemical shift range of 3.2 ppm or more and 3.42 ppm or less, and a peak derived from $-CH<$ and $-CH_2-$ of the oxypropylene unit is observed in a chemical shift range of more than 3.42 ppm and 3.8 ppm or less. In addition, in the $^1$H-NMR spectrum, a ratio of an integrated value of the peak of 3.2 ppm to 3.8 ppm to the sum of the integrated value of this peak, an integrated value of a peak of hydrogen atoms of the $-CH_2-$ group bonded to the oxygen atom, and an integrated value of a peak of a hydrogen atom of the $-CH<$ group bonded to the oxygen atom is 98.1%.

(2) Evaluation

(a) PSOC life performance

The lead-acid battery described above is charged and discharged in the pattern shown in Table 1. The number of cycles until the terminal voltage reaches 1.2 V per unit cell is used as an index of the PSOC life performance. The PSOC life performance is expressed as a ratio when the result of the lead-acid battery C1 is 100.

[Table 1]

| Process | Content | Test condition | | Temperature (%) |
|---|---|---|---|---|
| | | Current, voltage, or number of repetitions | Abort condition | |
| 1 | CC discharge | 1C A | 59 seconds | 40 |
| 2 | CC discharge | 300 A | 1 second | |
| 3 | CV charge | 2.4 V/cell, at most 50 A | 10 seconds | |
| 4 | CC discharge | 1C A | 5 seconds | |
| 5 | Repeat processes 3, 4 | 5 times | - | |
| 6 | Repeat processes 1 to 5 | 50 times | - | |
| 7 | CV charge | 2.4 V/cell, at most 50 A | 900 seconds | |
| 8 | Repeat processes 1 to 7 | 72 times | - | |
| 9 | Rest | 15 hours | - | |
| 10 | Return to process 1 | - | - | |
| * CC discharge: constant current discharge CV charge: constant voltage charge | | | | |

(b) High-temperature overcharge life performance

Using the lead-acid battery, evaluation is performed under the following conditions.

More specifically, in order to set a more overcharge condition than the normal 4-10 min test specified in JIS D 5301, a test of 1 minute of discharge and 10 minutes of charge (1-10 min test) is performed at 75°C $\pm$ 3°C under the following charge-discharge conditions (high temperature light load test).

Discharge: 25 A, 1 minute
Charge: 2.47 V/cell, 25 A, 10 minutes
Water tank temperature: 75°C $\pm$ 3°C

The high temperature light load test is performed by repeating charge and discharge in the high temperature light load test. Determination discharge is performed at 300 A for 30 seconds every 480 charge-discharge cycles, and a case where a determination discharge end voltage falls below 1.2 V/cell or a charge end current during the cycle becomes 3 A or more is determined as the life, and the number of cycles until then is obtained. The high-temperature overcharge life performance is evaluated by a ratio (%) when the number of cycles of the lead-acid battery C1 is 100.

<<Lead-acid batteries E1 to E7 and c2>>

The components are mixed so that the content of the polymer compound in the negative electrode material determined by the procedure described above is the value shown in Table 2 to prepare a negative electrode paste. In preparing the negative electrode paste, carbon black is used as the carbonaceous material. For the carbon black, the BET specific surface area of the carbon black to be used is selected so that the product $S \times C$ obtained by the procedure described above is the value shown in Table 2, and an amount of the carbon black to be added to the negative electrode paste is adjusted. Except for these, a test battery is prepared and evaluated similarly to the lead-acid battery R1. In the lead-acid batteries E1 to E7, the concentration of the polymer compound in the electrolyte solution determined by the procedure described above is 500 ppm or less.

The results of the lead-acid batteries E1 to E7, R1 to R5, and C1 to C2 are shown in Table 2. R1 to R5 are reference examples, and C1 to C2 are comparative examples.

[Table 2]

| Battery No. | Product $S \times C$ ($m^2 \cdot g^{-1}$) | Content of polymer compound (mass ppm) | PSOC life performance (%) | High temperature overcharge life performance (%) |
|---|---|---|---|---|
| C1 | 0 | 0 | 100 | 100 |
| R1 | | 40 | 101 | 124 |
| R2 | | 160 | 102 | 237 |
| R3 | | 400 | 100 | 341 |
| R4 | | 600 | 98 | 243 |
| R5 | | 800 | 95 | 99 |
| C2 | 0.207 | 0 | 139 | 92 |
| E1 | | 40 | 142 | 107 |
| E2 | | 160 | 147 | 198 |
| E3 | | 320 | 149 | 241 |
| E4 | | 400 | 150 | 290 |
| E5 | | 600 | 149 | 203 |
| E6 | | 700 | 149 | 154 |
| E7 | | 800 | 149 | 79 |

As shown in Table 2, when the negative electrode material does not contain a carbonaceous material, even if the polymer compound is contained in the negative electrode material, the effect of improving the PSOC life performance is hardly obtained (comparison between C1 and R1 to R5). When the carbonaceous material is added to the negative electrode material, the PSOC life performance is improved by 39% (comparison between C1 and C2). On the other hand, when the carbonaceous material and the polymer compound are combined, the PSOC life performance is improved as compared with that expected from C1 to C2 and R1 to R5 (E1 to E7). It can be said that the PSOC life performance of E1 to E7 is synergistically improved by the combination of the polymer compound and the carbonaceous material (comparison between C1 to C2 and R1 to R5 and E1 to E7). From the viewpoint of securing a higher PSOC life performance, the content of the polymer compound is preferably 30 ppm or more, and more preferably 40 ppm or more. When the content of the polymer compound is 150 ppm or more or 160 ppm or more, higher PSOC life performance and high-temperature overcharge life performance can be secured.

«Lead-acid batteries E8 to E21»

The components are mixed so that the content of the polymer compound in the negative electrode material determined by the procedure described above is the value shown in Table 3 to prepare a negative electrode paste. Except for this, a test battery is prepared and evaluated similarly to the lead-acid battery C2.

The results of the lead-acid batteries E8 to E21 are shown in Table 3. The results of C1 and C2 are also shown in Table 3.

[Table 3]

| Battery No. | Product S × C (m²·g⁻¹) | Content of polymer compound (mass ppm) | PSOC life performance (%) | High temperature overcharge life performance (%) |
|---|---|---|---|---|
| C1 | 0 | 0 | 100 | 100 |
| C2 | 0.207 | 0 | 139 | 92 |
| E8 | 1.035 | 40 | 185 | 88 |
| E9 | 2.980 | 40 | 144 | 62 |
| E10 | 0.104 | 160 | 146 | 208 |
| E11 | 1.035 | 160 | 190 | 162 |
| E12 | 2.980 | 160 | 149 | 122 |
| E13 | 0.104 | 400 | 150 | 306 |
| E14 | 1.035 | 400 | 197 | 236 |
| E15 | 2.980 | 400 | 154 | 177 |
| E16 | 0.104 | 600 | 149 | 213 |
| E17 | 1.035 | 600 | 196 | 165 |
| E18 | 2.980 | 600 | 153 | 124 |
| E19 | 0.104 | 800 | 142 84 | |
| E20 | 1.035 | 800 | 196 | 61 |
| E21 | 2.980 | 800 | 151 | 47 |

As shown in Table 3, by combining the polymer compound and the carbonaceous material, high PSOC life performance can be obtained even if the product S × C changes.

From Tables 2 and 3, the content of the polymer compound is preferably 150 ppm or more or 160 ppm or more from the viewpoint of easily securing higher high-temperature overcharge life performance. From the same viewpoint, the content of the polymer compound is preferably 750 ppm or less, more preferably 700 ppm or less or 650 ppm or less, and may be 600 ppm or less or 500 ppm or less, or may be 400 ppm or less.

<<Lead-acid batteries E22 to E29 and C3 to C 11>>

The components are mixed so that the content of the polymer compound in the negative electrode material determined by the procedure described above is the value shown in Table 4 to prepare a negative electrode paste. For the carbon black, the BET specific surface area of the carbon black is selected so that the product S × C obtained by the procedure described above is the value shown in Table 4, and the amount of the carbon black to be added to the negative electrode paste is adjusted. Except for these, a test battery is prepared and evaluated similarly to the lead-acid battery C2. In these lead-acid batteries, the specific surface area S of carbon black is selected in a range of 69 m²/g to 745 m²/g; however, the present invention is not limited to this range.

The results of the lead-acid batteries E22 to E29 are shown in Table 4. The results of C1, C2, and E4 are also shown in Table 4.

[Table 4]

| Battery No. | Product S × C (m²·g⁻¹) | Content of polymer compound (mass ppm) | PSOC life performance (%) | High temperature overcharge life performance (%) |
|---|---|---|---|---|
| C1 | 0 | 0 | 100 | 100 |
| C3 | 0.104 | 0 | 131 | 95 |
| C2 | 0.207 | 0 | 139 | 92 |
| C4 | 0.311 | 0 | 153 | 89 |
| C5 | 0.690 | 0 | 168 | 87 |
| C6 | 1.380 | 0 | 178 | 81 |
| C7 | 2.070 | 0 | 186 | 72 |
| C8 | 2.235 | 0 | 190 | 61 |
| C9 | 3.353 | 0 | 199 | 57 |
| C10 | 7.450 | 0 | 210 | 53 |
| C11 | 14.90 | 0 | 217 | 40 |
| E4 | 0.207 | 400 | 150 | 290 |
| E22 | 0.311 | 400 | 158 | 261 |
| E23 | 0.690 | 400 | 176 | 239 |
| E24 | 1.380 | 400 | 192 | 218 |
| E25 | 2.070 | 400 | 215 | 182 |
| E26 | 2.235 | 400 | 201 | 167 |
| E27 | 3.353 | 400 | 211 | 152 |
| E28 | 7.450 | 400 | 222 | 118 |
| E29 | 14.90 | 400 | 238 | 84 |

As shown in Table 4, by combining the polymer compound and the carbonaceous material, high PSOC life performance can be obtained even if the product S × C changes. From the viewpoint of securing higher high-temperature overcharge life performance, the product S × C is preferably 15 m²/g or less (or 10 m²/g or less), and may be 8 m²/g or less or 4 m²/g or less.

«Lead-acid batteries E30 and C 12»

In the lead-acid battery E30, carbon black (CB) and graphite (FG) are used in combination as carbonaceous materials. As the graphite, graphite having a particle size of 32 μm or more and a specific surface area S of 3 m²/g is used. The specific surface area S of the carbon black to be used is selected and an amount of each carbonaceous material added is adjusted so that the product S × C is the value shown in Table 5. In the lead-acid battery C12, carbon black (CB) is used as the carbonaceous material. The specific surface area S of the carbon black to be used is selected and the addition amount is adjusted so that the product S × C is the value shown in Table 5. Except for these, a test battery is prepared similarly to the lead-acid battery E1, and the PSOC life performance is evaluated. In these lead-acid batteries, the specific surface area S of the carbonaceous material is selected in a range of 3 m²/g to 69 m²/g; however, the present invention is not limited to this range.

The results of the lead-acid batteries E30 and C12 are shown in Table 5. The results of the lead-acid batteries E22 and C1 are also shown in Table 5. The PSOC life performance is expressed as a ratio (%) when the result of the lead-acid battery C1 is 100%.

[Table 5]

| Battery No. | Carbonaceous material | Product S × C (m²·g⁻¹) | Ratio of first carbonaceous material (mass %) | Content of polymer compound (mass ppm) | PSOC life performance (%) |
|---|---|---|---|---|---|
| C1 | - | 0 | 0 | 0 | 100 |
| E22 | CB | 0.311 | 0 | 400 | 158 |
| C12 | CB | 0.311 | 0 | 0 | 142 |
| E30 | CB FG | 0.341 | 70 | 400 | 182 |

As shown in Table 5, when the product S × C is almost the same, the PSOC life performance is greatly improved by using the first carbonaceous material (comparison between E30 and E22).

«Lead-acid batteries E31 to E32»

The specific surface area S of the carbon black to be used is selected and the addition amount is adjusted so that the product S × C is the value shown in Table 6. Except for these, a test battery is prepared similarly to the lead-acid battery E1, and the PSOC life performance is evaluated. In these lead-acid batteries, the specific surface area S of carbon black is selected in a range of 69 m²/g to 745 m²/g; however, the present invention is not limited to this range.
The results of the lead-acid batteries E31 to E32 are shown in Table 6. The results of the lead-acid batteries E25 to E29 and C1 are also shown in Table 6.

[Table 6]

| Battery No. | Product S × C (m²·g⁻¹) | Content of polymer compound (mass ppm) | PSOC life performance (%) |
|---|---|---|---|
| C1 | 0 | 0 | 100 |
| E26 | 2.235 | 400 | 201 |
| E27 | 3.353 | 400 | 211 |
| E28 | 7.450 | 400 | 222 |
| E29 | 14.90 | 400 | 238 |
| E31 | 7.450 | 600 | 243 |
| E32 | 7.450 | 800 | 246 |
| E25 | 2.070 | 400 | 215 |

As shown in Table 6, high PSOC life performance can be secured even when the product S × C increases. In addition, even when the content of the polymer compound is changed, high PSOC life performance is obtained.

«Lead-acid batteries E33 to E43»

A polymer compound (polypropylene glycol) having Mn shown in Table 7 is used. The constituent components of the negative electrode paste are mixed so that the content C of the polymer compound in the negative electrode material is the value shown in Table 7. The specific surface area S of the carbonaceous material to be used is selected and the amount of carbonaceous material added is adjusted so that the product S × C is the value shown in Table 7. Except for these, a test battery is prepared similarly to the lead-acid battery E1, and the following evaluations (c) and (d) are performed. The polymer compounds used in E37 to E40 are the same as the polymer compounds used in E33 to E36, respectively. The polymer compounds used in E41 to E43 are the same as the polymer compound used in E35.
For the polymer compound, in the $^1$H-NMR spectrum, the ratio of the integrated value of the peak of 3.2 ppm to 3.8 ppm to the sum of the integrated value of this peak, the integrated value of the peak of hydrogen atoms of the -CH$_2$- group bonded to the oxygen atom, and the integrated value of the peak of the hydrogen atom of the -CH< group bonded to the oxygen atom is 90.8% to 98.7%.

(c) Low temperature HR discharge performance after high temperature light load test

The test battery after full charge after the high temperature light load test in (b) above is discharged at a discharge current of 150 A at -15°C $\pm$ 1°C until the terminal voltage reaches 1.0 V/cell, and a discharge time (low temperature HR discharge duration time after light load test) (s) at this time is obtained. The longer the discharge duration time, the better the low temperature HR discharge performance. The lead-acid battery C1 is also evaluated in the same manner, and the low temperature HR discharge performance after the high temperature light load test of each battery is evaluated by a ratio (%) when the discharge duration time of C1 is 100.

(d) Charge acceptability

A 10 second electric quantity is measured using the test battery after full charge. Specifically, the test battery is discharged at 6.4 A for 30 minutes and left for 16 hours. Thereafter, the test battery is charged at a constant current and a constant voltage of 2.42 V/cell while the upper limit of the current is 200 A, and an integrated electric quantity for 10 seconds (10 second electric quantity) at this time is measured. Both operations are performed in a water tank at 25°C. The lead-acid battery C1 is also evaluated in the same manner, and the charge acceptability of each battery is evaluated by a ratio (%) when the result of C1 is 100.
The results of the lead-acid batteries E33 to E43 are shown in Table 7. The results of C1 are also shown in Table 7.

[Table 7]

| | C1 | E33 | E34 | E35 | E36 | E37 | E38 | E39 | E40 | E41 | E42 | E43 |
|---|---|---|---|---|---|---|---|---|---|---|---|---|
| Content of polymer compound in negative electrode material (mass ppm) | - | 82 | | | | 350 | | | | 800 | | |
| Product S × C (m$^2$·g$^{-1}$) | 0.207 | 0.207 | | | | 0.207 | | | | 0.207 | 2.235 | 7.450 |
| Mn of polymer compound | - | 400 | 1000 | 2000 | 3000 | 400 | 1000 | 2000 | 3000 | 2000 | | |
| Amount of overcharge (%) | 100 | 95 | 81 | 76 | 74 | 57 | 51 | 48 | 45 | 25 | 58 | 80 |
| Charge acceptability (%) | 100 | 96 | 94 | 92 | 91 | 58 | 57 | 55 | 54 | 30 | 77 | 105 |
| Low temperature HR discharge performance (%) after light load test | 100 | 101 | 123 | 131 | 134 | 82 | 90 | 94 | 96 | 8 | 113 | 128 |

As shown in Table 7, when the Mn of the polymer compound is 1,000 or more, the generation of hydrogen gas during overcharge is suppressed, and the effect of reducing the amount of overcharge is enhanced. This is considered to be because the polymer compound tends to remain in the negative electrode material. In addition, when the Mn is 1,000 or more, the effect of suppressing deterioration of the low temperature HR discharge performance after the high temperature light load test can be enhanced. This is considered to be because by reducing the amount of overcharge, the structural change of the negative active material due to the collision of the hydrogen gas with the negative active material is suppressed.

<<Lead-acid batteries E44-1 to E47-1, E44-2 to E-47-2, E48, and E49>>

A polymer compound (polypropylene glycol) having Mn shown in Table 8 is added to the negative electrode material and the electrolyte solution. The composition of the negative electrode paste is adjusted so that the content of the polymer compound in the negative electrode material determined by the procedure described above is the value shown in Table 8. The polymer compound is added to the electrolyte solution so that the concentration of the polymer compound in the electrolyte solution determined by the procedure described above is the value shown in Table 8. Except for these, a test battery is prepared in the same manner as in the lead-acid battery E1, and the amount of overcharge is evaluated. The polymer compounds used in E44-1 to E47-1 are the same as the polymer compounds used in E33 to E36, respectively. The polymer compounds used in E48 to E49 are the same as the polymer compound used in E35. The polymer compounds used in E44-2 to E47-2 are the same as the polymer compounds used in E33 to E36, respectively.

The results of the lead-acid batteries E44-1 to E47-1, E44-2 to E47-2, E48, and E49 are shown in Table 8. The results of the lead-acid battery C1 are also shown in Table 8.

[Table 8]

| | C1 | E44-1 | E45-1 | E46-1 | E47-1 | E44-2 | E45-2 | E46-2 | E47-2 | E48 | E49 |
|---|---|---|---|---|---|---|---|---|---|---|---|
| Content of polymer compound in negative electrode material (mass ppm) | - | 31 | | | | 62 | | | | 31 | |
| Product S × C (m²·g⁻¹) | 0.207 | 0.207 | | | | 0.207 | | | | 2.235 | 7.450 |
| Concentration of polymer compound in electrolyte solution (mass ppm) | - | 1200 | | | | 2400 | | | | 1200 | |
| Mn of polymer compound in negative electrode material and in electrolyte solution | - | 400 | 1000 | 2000 | 3000 | 400 | 1000 | 2000 | 3000 | 2000 | |
| Amount of overcharge (%) | 100 | 96 | 77 | 85 | 83 | 83 | 77 | 79 | 51 | 96 | 101 |

As shown in Table 8, when the Mn of the polymer compound is 1,000 or more, the effect of reducing the amount of overcharge is remarkably enhanced. This is considered to be because the adsorptivity to lead is enhanced. In addition, it is considered that when the polymer compound is contained in the electrolyte solution at a certain concentration, elution of the polymer compound from the negative electrode plate is also suppressed.

«Lead-acid batteries E50 to E57 and C13 to C 15»

An organic expander having a sulfur (S) element content shown in Table 9 is used. The constituent components of the negative electrode paste are mixed so that the content of the polymer compound in the negative electrode material determined by the procedure described above is the value shown in Table 9. Except for these, a test battery is prepared in the same manner as in the lead-acid battery E1, and the amount of overcharge and the charge acceptability are evaluated. The initial low temperature HR discharge performance is evaluated by the following procedure (e) using the lead-acid battery.

As the organic expander, the following expanders are used.

(e2): Lignin sulfonate (sulfur element content: 600 $\mu$mol/g, Mw = 5,500)
(e3): Condensate of bisphenol compound having sulfonic acid group introduced and formaldehyde (sulfur element content: 3,000 pmol/g, Mw = 9,000)
(e4): Condensate of bisphenol compound having sulfonic acid group introduced and formaldehyde (sulfur element content: 7,000 $\mu$mol/g, Mw = 9,000)

As for the sulfur element content ($\mu$mol/g) in the organic expander, there is substantially no difference between a value before preparation of the negative electrode material and a value measured by disassembling the lead-acid battery and extracting each organic expander.

(e) Initial low temperature HR discharge performance

The test battery after full charge is discharged at a discharge current of 150 A at -15°C $\pm$ 1°C until the terminal voltage reaches 1.0 V/cell, and the discharge time (initial low temperature HR discharge duration time) (s) at this time is obtained. The longer the discharge duration time, the better the low temperature HR discharge performance.

The initial low temperature HR discharge performance and the charge acceptability of the lead-acid battery C1 are also evaluated in accordance with the above.

The amount of overcharge and the initial low temperature HR discharge performance of each of the lead-acid batteries E50, E52, E54, and E56 are evaluated by a ratio (%) when data of each of the lead-acid batteries C13, C14, C1, and C15 using the organic expander having the same sulfur element content is 100. The amount of overcharge and the initial low temperature HR discharge performance of each of the lead-acid batteries E51, E53, E55, and E57 are evaluated by the ratio (%) when data of each of the lead-acid batteries C13, C14, C1, and C15 using the organic expander having the same sulfur element content is 100.

The charge acceptability of each of the lead-acid batteries E50, E52, E54, and E56 is evaluated by a ratio (%) when the 10 second electric quantity of each of the lead-acid batteries C13, C14, C1, and C15 using an organic expander having the same sulfur element content is 100. The charge acceptability of each of the lead-acid batteries E51, E53, E55, and E57 is evaluated by the ratio (%) when the 10 second electric quantity of each of the lead-acid batteries C13, C14, C1, and C15 using an organic expander having the same sulfur element content is 100.

The results of the lead-acid batteries E50 to E57 and C13 to C15 are shown in Table 9. The results of the lead-acid battery C1 are also shown in Table 9.

[Table 9]

| | C13 | E50 | E51 | C14 | E52 | E53 | C1 | ES4 | E55 | C15 | E56 | E57 |
|---|---|---|---|---|---|---|---|---|---|---|---|---|
| Content of polymer compound in negative electrode material (mass ppm) | 0 | 82 | 82 | 0 | 82 | 82 | 0 | 82 | 82 | 0 | 82 | 82 |

(continued)

| | C13 | E50 | E51 | C14 | E52 | E53 | C1 | ES4 | E55 | C15 | E56 | E57 |
|---|---|---|---|---|---|---|---|---|---|---|---|---|
| Product S × C (m²·g⁻¹) | 0.207 | | 2.235 | 0.207 | | 2.235 | 0.207 | | 2.235 | 0.207 | | 2.235 |
| Organic expander | e2 | | | e3 | | | e1 | | | e4 | | |
| S element content of organic expander (μmol/g) | 600 | | | 3000 | | | 5000 | | | 7000 | | |
| Amount of overcharge (%) | 100 | 75 | 95 | 100 | 75 | 96 | 100 | 76 | 96 | 100 | 75 | 95 |
| Charge acceptability (%) | 100 | 85 | 107 | 100 | 92 | 113 | 100 | 92 | 116 | 100 | 95 | 116 |
| Initial low temperature HR discharge performance (%) | 100 | 113 | 113 | 100 | 107 | 105 | 100 | 105 | 105 | 100 | 104 | 101 |

As shown in Table 9, when the polymer compound and the first organic expander (preferably, an organic expander having a sulfur element content of 3,000 μmol/g or more) are used in combination, the deterioration of the charge acceptability is further suppressed. When the first organic expander is used, the particle size of lead sulfate generated during discharge is small and the specific surface area is large as compared with the case of using an organic expander having a small sulfur element content, so that lead sulfate is less likely to be coated with the polymer compound. As a result, it is considered that in the case of using the first organic expander, the deterioration of the charge acceptability is suppressed as compared with the case of using an organic expander having a small sulfur element content.

When the second organic expander having a small sulfur element content such as lignin sulfonate is used in combination with the polymer compound, the initial low temperature HR discharge performance is greatly improved. This is considered to be because the particle size of the colloid formed in sulfuric acid by the second organic expander is reduced by the surfactant action of the polymer compound as compared with a case where the polymer compound is not used, so that the discharge reaction easily proceeds. On the other hand, in the first organic expander having a high sulfur element content, even when the polymer compound is not used, the particle size of the colloid to be produced is small, and therefore, a change in particle size due to addition of the polymer compound is small. Thus, it is considered that an effect of improving the low temperature HR discharge performance is reduced.

<<Lead-acid batteries E58 to E62>>

The first organic expander and/or the second organic expander having a sulfur (S) element content shown in Table 10 are used, and the components are mixed so that the content of each organic expander determined by the procedure described above is the value shown in Table 10. At this time, the content of the polymer compound in the negative electrode material determined by the procedure described above is 82 ppm. Except for these, a test battery is prepared similarly to the lead-acid battery E1, and the charge acceptability is evaluated. As the first organic expander, the same (e1) as in the lead-acid battery E1 is used, and as the second organic expander, the same lignin sulfonate (e2) as in the lead-acid battery E50 is used. As for the sulfur element content (μmol/g) in the organic expander, there is substantially no difference between a value before preparation of the negative electrode material and a value measured by disassembling the lead-acid battery and extracting each organic expander.

The charge acceptability of the lead-acid batteries E59 to E62 is evaluated by a ratio (%) when the 10 second electric quantity of the lead-acid battery E58 is 100.

The results of the lead-acid batteries E58 to E62 are shown in Table 10.

[Table 10]

|  | E58 | E59 | E60 | E61 | E62 |
|---|---|---|---|---|---|
| Content of polymer compound in negative electrode material (mass ppm) | 82 | | | | |
| Product S $\times$ C ($m^2 \cdot g^{-1}$) | 0.207 | | | | |
| First organic expander (S element content: 5,000 $\mu$mol $g^{-1}$) (mass %) | 0 | 0.05 | 0.1 | 0.15 | 0.2 |
| Second organic expander (S element content: 600 $\mu$mol $g^{-1}$) (mass %) | 0.2 | 0.15 | 0.1 | 0.05 | 0 |
| Charge acceptability (%) | 100 | 105 | 111 | 108 | 103 |

As shown in Table 10, when the polymer compound is used, high charge acceptability is obtained by using both organic expanders in combination. The result when the first organic expander and the second organic expander are used in combination is superior to the value of the charge acceptability assumed when each organic expander is used alone. From this, it can be said that when the polymer compound is used, a synergistic effect is obtained by using the first organic expander and the second organic expander.

<<Lead-acid batteries E63 and E64>>

An organic expander e5 (condensate of bisphenol S compound having sulfonic acid group introduced and phenol sulfonic acid with formaldehyde (sulfur element content: 4,000 $\mu$mol/g, Mw = 8,000)) is used. In the lead-acid battery E64, the specific surface area of the carbon black to be used is selected and the amount of the carbonaceous material added is adjusted so that the product S $\times$ C is the value shown in Table 11. Except for these, a test battery is prepared and evaluated similarly to the lead-acid battery E35.

<<Lead-acid batteries C 16-1, C 16-2, C 17-1, and C 17-2>>

When the constituent components of the negative electrode paste are mixed, lignin sulfonate (sulfur element content is 600 $\mu$mol/g, Mw = 5,500) or oil is added in place of the polymer compound so that the content in the negative electrode material is the value shown in Table 11. Except for this, a test battery is prepared and evaluated similarly to the lead-acid battery E35. As the oil, a paraffin-based oil is used. Neither the paraffin-based oil nor the lignin sulfonate has a peak in a range of 3.2 ppm or more and 3.8 ppm or less in a chemical shift of a $^1$H-NMR spectrum measured using deuterated chloroform as a solvent.

The results of the lead-acid batteries E63, E64, C16-1, C16-2, C17-1, and C17-2 are shown in Table 11. The results of the lead-acid batteries C1 and E35 are also shown in Table 11.

[Table 11]

|  | C1 | E35 | E63 | E64 | C16-1 | C16-2 | C17-1 | C17-2 |
|---|---|---|---|---|---|---|---|---|
| Content of polymer compound in negative electrode material (mass ppm) | 0 | 82 | 82 | 82 | 0 | | 0 | |
| Product S $\times$ C ($m^2 \cdot g^{-1}$) | 0 | 0.207 | 0.207 | 2.235 | 0 | | 0 | |
| Organic expander (content in negative electrode material (mass %)) | e1 (0.1) | e1 (0.1) | e5 (0.1) | e5 (0.1) | e1 (0.1) | | e1 (0.1) | |
| Additive (content in negative electrode material) | - | - | - | - | Lignin sulfonate | | Oil | |
|  | | | | | 82 mass ppm | 0.1 mass % | 82 mass ppm | 0.1 mass % |
| Amount of overcharge (%) | 100 | 76 | 74 | 95 | 100 | 86 | 101 | 82 |
| Charge acceptability (%) | 100 | 92 | 93 | 114 | 100 | 87 | 99 | 90 |
| Low temperature HR discharge performance (%) after light load test | 100 | 131 | 128 | - | - | 136 | - | 109 |

As shown in Table 11, in the lead-acid batteries E35, E63, and E64, the amount of overcharge can be effectively reduced even when the content of the polymer compound in the negative electrode material is as very small as 82 ppm. On the other hand, in the lead-acid battery C16-1 or C17-1 using lignin sulfonate or oil, unlike the lead-acid batteries E35, E63, and E64 using the polymer compound, the effect of reducing the amount of overcharge is not observed at all. From this, it is considered that the polymer compound is in a state in which an interaction such as an adsorption action on lead or lead sulfate is different from that of lignin sulfonate or oil in the negative electrode material. As described above, even when a conventional organic additive (specifically, an organic additive having no peak in the range of 3.2 ppm or more and 3.8 ppm or less in the chemical shift of the $^1$H-NMR spectrum) is used instead of the polymer compound, the effect of reducing the amount of overcharge cannot be obtained. Thus, in the lead-acid batteries C16-1 and C17-1, the effect of suppressing the hydrogen generation during overcharge is small, and the liquid decrease suppressing effect is small.

As indicated by C16-2 and C17-2, even in the case of using lignin sulfonate or oil, when the content in the negative electrode material is large, the effect of reducing the amount of overcharge can be obtained to some extent. However, when lignin sulfonate or oil is added to such an extent that the effect of reducing the amount of overcharge is obtained, the charge acceptability is also deteriorated. That is, with the conventional organic additive, it is difficult to suppress the deterioration of the charge acceptability while reducing the amount of overcharge. On the other hand, in the lead-acid batteries E35, E63, and E64, although a high effect of reducing the amount of overcharge is obtained, the deterioration of the charge acceptability is suppressed, and high charge acceptability can be secured. From this, it is considered that in the negative electrode material, most of the surface of lead or lead sulfate is thinly covered with the polymer compound, and the hydrogen overvoltage in the negative electrode plate increases. It is considered that since the lead surface is thinly covered with the polymer compound, elution of lead sulfate is less likely to be inhibited, and therefore, the deterioration of the charge acceptability is suppressed in the lead-acid batteries E35, E63, and E64. Therefore, as compared with the case of using other organic additives such as lignin sulfonate and oil, it can be said that the effect of simultaneously achieving the effect of reducing the amount of overcharge and the effect of suppressing the deterioration of the charge acceptability is enhanced in the case of using the polymer compound.

In the lead-acid batteries E35, E63, and E64, as compared with the lead-acid battery C1, high low temperature HR discharge performance can be secured even after the high temperature light load test. This is considered to be because the uneven distribution of the polymer compound in the lead pores is suppressed, so that ions easily move, the generation of hydrogen gas during overcharge is suppressed, and the structural change of the negative active material due to the collision of hydrogen gas is reduced.

From the results of Table 9, it can be seen that an effect similar to that of the lead-acid batteries E35 and E63 can be obtained also in the case of using the organic expanders e2 to e4.

<<Lead-acid batteries E65 to E71>>

As the polymer compound, the polymer compound shown in Table 12 is used. The constituent components of the negative electrode paste are mixed so that the content of the polymer compound in the negative electrode material (solid content of the negative electrode paste) determined by the procedure described above is the value shown in Table 12. Except for these, a test battery is prepared and evaluated similarly to the lead-acid battery E35. For the polymer compound, in the $^1$H-NMR spectrum, the ratio of the integrated value of the peak of 3.2 ppm to 3.8 ppm to the sum of the integrated value of this peak, the integrated value of the peak of hydrogen atoms of the $-CH_2-$ group bonded to the oxygen atom, and the integrated value of the peak of the hydrogen atom of the -CH< group bonded to the oxygen atom is 97.6% to 99.7%.

The results of the lead-acid batteries E65 to E71 are shown in Table 12. The results of the lead-acid battery C1 are also shown in Table 12.

[Table 12]

| | Content of polymer compound in negative electrode material (mass ppm) | Product S × C (m²·g⁻¹) | Polymer compound | | Amount of overcharge (%) | Charge acceptability (%) |
|---|---|---|---|---|---|---|
| | | | Type | Mn | | |
| | C1 0 | | - | - | 100 | 100 |
| E65 | 300 | 0.207 | Polypropylene glycol | 2000 | 44 | 58 |
| E66 | 300 | | Polyoxyethylene polyoxypropylene butyl ether (oxypropylene unit 43 mol%) | 1800 | 44 | 81 |
| E67 | 300 | | Polyoxypropylene butyl ether | 2390 | 55 | 85 |
| E68 | 300 | | Polyoxyethylene polyoxypropylene hexylene glycol ether (oxypropylene unit 20 mol%) | 14000 | 37 | 54 |
| E69 | 300 | | Polyoxypropylene methyl ether | 1800 | 45 | 78 |
| E70 | 300 | | Polyoxypropylene ethyl ether | 2200 | 45 | 77 |
| E71 | 300 | | Polyoxypropylene acetate | 1900 | 45 | 76 |

As shown in Table 12, even when an etherified product or an esterified product of a hydroxy compound having the repeating structure of the oxy $C_{2-4}$ alkylene units is used, the deterioration of the charge acceptability is suppressed while reducing the amount of overcharge.

INDUSTRIAL APPLICABILITY

The lead-acid battery according to one aspect and another aspect of the present invention is useful as a lead-acid battery for IS that is charged and discharged under a PSOC condition. The lead-acid battery for IS is suitable for an idling stop vehicle. The lead-acid battery can also be suitably used as, for example, a power source for starting a vehicle (automobiles, motorcycles, etc.) and a power source for an industrial energy storage apparatus or the like such as an electric vehicle (forklift, etc.). Note that these applications are merely illustrative and not limited to these applications.

DESCRIPTION OF REFERENCE SIGNS

1: lead-acid battery
2: negative electrode plate
3: positive electrode plate
4: separator
5: positive electrode shelf portion
6: negative electrode shelf portion
7: positive pole
8: penetrating connection body
9: negative pole
11: element
12: container
13: partition
14: cell chamber
15: lid
16: negative electrode terminal
17: positive electrode terminal
18: vent plug

**Claims**

1. A lead-acid battery comprising a positive electrode plate, a negative electrode plate, and an electrolyte solution,

   wherein the negative electrode plate includes a negative electrode material,
   the negative electrode material contains a polymer compound and a carbonaceous material, and
   the polymer compound has a peak in a range of 3.2 ppm or more and 3.8 ppm or less in a chemical shift of $^1$H-NMR spectrum.

2. The lead-acid battery according to claim 1, wherein when a specific surface area of the carbonaceous material is S (m$^2$/g) and a content of the carbonaceous material in the negative electrode material is C, a product: S × C of the specific surface area and the content per 1 g of the negative electrode material is 0.1 m$^2$/g or more.

3. The lead-acid battery according to claim 1 or 2, wherein a content of the polymer compound in the negative electrode material is 30 ppm or more on a mass basis.

4. The lead-acid battery according to any one of claims 1 to 3, wherein the carbonaceous material includes at least a first carbonaceous material having a particle size of 32 pm or more.

5. The lead-acid battery according to any one of claims 1 to 4, wherein the polymer compound contains an oxygen atom bonded to a terminal group and a -CH$_2$- group and/or a -CH< group bonded to the oxygen atom, and in the $^1$H-NMR spectrum, a ratio of an integrated value of the peak to a sum of the integrated value of the peak, an integrated value of a peak of a hydrogen atom of the -CH$_2$- group, and an integrated value of a peak of a hydrogen atom of the -CH< group is 85% or more.

6. The lead-acid battery according to any one of claims 1 to 5, wherein the polymer compound contains a repeating structure of oxy C$_{2-4}$ alkylene units.

7. The lead-acid battery according to claim 6, wherein the polymer compound contains at least one selected from the group consisting of an etherified product of a hydroxy compound having a repeating structure of the oxy C$_{2-4}$ alkylene units and an esterified product of a hydroxy compound having the repeating structure of the oxy C$_{2-4}$ alkylene units, and
   the hydroxy compound is at least one selected from the group consisting of a poly C$_{2-4}$ alkylene glycol, a copolymer having a repeating structure of oxy C$_{2-4}$ alkylene, and a C$_{2-4}$ alkylene oxide adduct of a polyol.

8. The lead-acid battery according to claim 6 or 7, wherein the repeating structure of the oxy C$_{2-4}$ alkylene units contains at least a repeating structure of oxypropylene units.

9. The lead-acid battery according to any one of claims 1 to 8, wherein the polymer compound contains at least a compound having a number average molecular weight of 1,000 or more.

10. The lead-acid battery according to any one of claims 1 to 9, wherein the content C of the carbonaceous material is 0.45% by mass or more by percentage.

11. A lead-acid battery comprising a positive electrode plate, a negative electrode plate, and an electrolyte solution,

    wherein the negative electrode plate includes a negative electrode material, and
    the negative electrode material contains a carbonaceous material and a polymer compound having a repeating structure of oxy C$_{2-4}$ alkylene units.

12. The lead-acid battery according to claim 11, wherein when a specific surface area of the carbonaceous material is S (m$^2$/g) and a content of the carbonaceous material in the negative electrode material is C, a product: S × C of the specific surface area and the content per 1 g of the negative electrode material is 0.1 m$^2$/g or more.

13. The lead-acid battery according to claim 11 or 12, wherein a content of the polymer compound in the negative electrode material is 30 ppm or more on a mass basis.

14. The lead-acid battery according to any one of claims 11 to 13, wherein the carbonaceous material includes at least a first carbonaceous material having a particle size of 32 pm or more.

15. The lead-acid battery according to any one of claims 11 to 14, wherein the polymer compound contains an oxygen atom bonded to a terminal group and a -$CH_2$- group and/or a -CH< group bonded to the oxygen atom, and in the $^1$H-NMR spectrum, a ratio of an integrated value of the peak to a sum of the integrated value of the peak, an integrated value of a peak of a hydrogen atom of the -$CH_2$- group, and an integrated value of a peak of a hydrogen atom of the -CH< group is 85% or more.

16. The lead-acid battery according to any one of claims 11 to 15, wherein the polymer compound contains at least one selected from the group consisting of an etherified product of a hydroxy compound having a repeating structure of the oxy $C_{2-4}$ alkylene units and an esterified product of a hydroxy compound having the repeating structure of the oxy $C_{2-4}$ alkylene units, and the hydroxy compound is at least one selected from the group consisting of a poly $C_{2-4}$ alkylene glycol, a copolymer having a repeating structure of oxy $C_{2-4}$ alkylene, and a $C_{2-4}$ alkylene oxide adduct of a polyol.

17. The lead-acid battery according to any one of claims 11 to 16, wherein the repeating structure of the oxy $C_{2-4}$ alkylene units contains at least a repeating structure of oxypropylene units.

18. The lead-acid battery according to any one of claims 11 to 17, wherein the polymer compound contains at least a compound having a number average molecular weight of 1,000 or more.

19. The lead-acid battery according to any one of claims 11 to 18, wherein the content C of the carbonaceous material is 0.45% by mass or more by percentage.

Fig. 1

## INTERNATIONAL SEARCH REPORT

| International application No. |
| --- |
| PCT/JP2020/021477 |

### A. CLASSIFICATION OF SUBJECT MATTER
H01M 4/62(2006.01)i; H01M 4/14(2006.01)i; H01M 10/06(2006.01)i
FI: H01M4/62 B; H01M4/14 Q; H01M10/06 Z

According to International Patent Classification (IPC) or to both national classification and IPC

### B. FIELDS SEARCHED

Minimum documentation searched (classification system followed by classification symbols)
H01M4/62; H01M4/14; H01M10/06

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | CN 101937996 A (FENGFAN CO., LTD.) 05.01.2011 (2011-01-05) paragraphs [0013]-[0028] | 1, 3, 5-7, 10-11, 13, 15-16, 19 |
| X | JP 51-47237 A (YUASA BATTERY CO., LTD.) 22.04.1976 (1976-04-22) claims, page 1, right column, line 14 to page 3, right column, line 1 | 1, 3, 5-7, 11, 13, 15-16 |
| X | CN 108630937 A (ZHEJIANG UNIVERSITY OF TECHNOLOGY) 09.10.2018 (2018-10-09) paragraphs [0031]-[0070] | 1-3, 6-7, 10-11, 13, 16, 19 |
| A | JP 60-182662 A (JAPAN STORAGE BATTERY CO., LTD.) 18.09.1985 (1985-09-18) | 1-19 |
| A | JP 9-147869 A (SHIN-KOBE ELECTRIC MACHINERY CO., LTD.) 06.06.1997 (1997-06-06) | 1-19 |

☒ Further documents are listed in the continuation of Box C.     ☒ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 06 August 2020 (06.08.2020) | 18 August 2020 (18.08.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2020/021477

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-190570 A (GS YUASA INTERNATIONAL LTD.) 29.11.2018 (2018-11-29) | 1-19 |

Form PCT/ISA/210 (continuation of second sheet) (January 2015)

INTERNATIONAL SEARCH REPORT

Information on patent family members

International application No.

PCT/JP2020/021477

| Patent Documents referred in the Report | Publication Date | Patent Family | Publication Date |
|---|---|---|---|
| CN 101937996 A | 05 Jan. 2011 | (Family: none) | |
| JP 51-47237 A | 22 Apr. 1976 | (Family: none) | |
| CN 108630937 A | 09 Oct. 2018 | (Family: none) | |
| JP 60-182662 A | 18 Sep. 1985 | (Family: none) | |
| JP 9-147869 A | 06 Jun. 1997 | (Family: none) | |
| JP 2018-190570 A | 29 Nov. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017188477 A
- JP 60182662 A
- JP 2000149980 A
- JP W2017525092 B
- JP W2018508961 B